# EUROPEAN PATENT APPLICATION

(11) **EP 4 832 398 A1**
(43) Date of publication of application: **28.10.2026**
(21) Application number: 24914974.1
(22) Date of filing: 25.10.2024
(51) Int. Cl.: H04L 5/00

(54) **COMMUNICATION METHOD AND APPARATUS**

(30) Priority: 04.01.2024 CN 202410027365
(71) Applicant: Huawei Technologies Co., Ltd., Shenzhen, Guangdong 518129 (CN)
(72) Inventor: LIU, Lei, Shenzhen, Guangdong 518129 (CN); BI, Xiaoyan, Shenzhen, Guangdong 518129 (CN)
(74) Representative: Huawei European IPR
(86) International application number: PCT/CN2024/127422
(87) International publication number: WO 2025/145757

(57) **Abstract**

A communication method and apparatus are provided. The method includes: A network device sends first information and second information, where the first information indicates a first sequence, the second information indicates positions of reference signal resources, and the reference signal resources are non-uniformly distributed in frequency domain. A terminal device determines a second sequence based on the first sequence and the positions of the reference signal resources, where the second sequence corresponds to a reference signal. According to the method, the second sequence obtained by the terminal device matches the positions of the reference signal resources. Even if the reference signal resources are non-uniformly distributed in frequency domain, the second sequence is applicable, so that the reference signal mapped to the reference signal resources can have a lower PAPR.

## Description

### CROSS-REFERENCE TO RELATED APPLICATIONS

This application claims priority to Chinese Patent Application No. 202410027365.7, filed with the China National Intellectual Property Administration on January 4, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In new radio (new radio, NR), reference signal resources are arranged at equal intervals in frequency domain, and the reference signal is a Zadoff-Chu (Zadoff-Chu, ZC) sequence with a constant envelope property. This ensures that the reference signal has a lower peak-to-average power ratio (peak-to-average power ratio, PAPR).

As the scale of antenna arrays increases, a quantity of reference signal ports increases correspondingly. Maintaining uniformly distributed reference signal resources would result in high resource overhead. To reduce resource overhead, a design with sparse, non-uniformly distributed reference signal resources has been proposed. However, if a ZC sequence with the constant envelope property is still used to generate a reference signal sequence and the reference signal sequence is then mapped to non-uniform frequency domain resources, a lower PAPR cannot be ensured, resulting in low decoding accuracy for the network device.

### SUMMARY

Embodiments of this application provide a communication method and apparatus, to provide a reference signal that matches non-uniformly distributed reference signal resources, so that the reference signal mapped to the reference signal resources has a lower PAPR, thereby improving decoding accuracy for a device.

To achieve the foregoing objective, the following technical solutions are used in embodiments of this application.

According to a first aspect, an embodiment of this application provides a communication method. The method may be performed by a first communication apparatus. The first communication apparatus may be a combined device, a component, or the like that is configured to implement a function of a terminal device. For example, the first communication apparatus is the terminal device, or the first communication apparatus is a unit/module, a circuit, a chip, or the like in the terminal device. The following describes the method provided in the first aspect by using an example in which the first communication apparatus is the terminal device.

The communication method includes: A terminal device receives first information and second information, where the first information indicates a first sequence, the second information indicates positions of reference signal resources, and the reference signal resources are non-uniformly distributed in frequency domain. The terminal device determines a second sequence based on the first sequence and the positions of the reference signal resources, where the second sequence corresponds to a reference signal. That the second sequence corresponds to the reference signal may also be understood as that the second sequence is for generating the reference signal.

In the method, the first sequence may be for generating the second sequence corresponding to the reference signal. The terminal device may generate the second sequence based on the positions of the reference signal resources and the first sequence. In this way, it may be considered that the second sequence matches the positions of the reference signal resources. Even if the reference signal resources are non-uniformly distributed in frequency domain, the second sequence is applicable, so that the reference signal mapped to the reference signal resources has a lower PAPR.

In an implementation, that the second information indicates the positions of the reference signal resources includes: The second information indicates M indexes. The M indexes are indexes of relative positions of the reference signal resources with respect to a reference resource, or the M indexes are indexes of absolute positions of the reference signal resources. M is a positive integer. The indexes of the relative positions of the reference signal resources with respect to the reference resource may be referred to as relative position indexes, or may be referred to as relative indexes for short. Similarly, the indexes of the absolute positions of the reference signal resources may be referred to as absolute position indexes, or may be referred to as absolute indexes for short.

This solution provides a manner of indicating the positions of the reference signal resources. For example, the positions of the reference signal resources are indicated by indicating the indexes of the positions of the reference signal resources. How to indicate the indexes of the positions of the reference signal resources is not limited in embodiments of this application. For example, the positions of the reference signal resources may be indicated by using the absolute position indexes or the relative position indexes of the reference signal resources.

In an implementation, the first sequence includes N elements, and the second sequence includes M elements in the N elements. Positions of the M elements in the N elements correspond to the M indexes, and N is a positive integer. Alternatively, the second sequence includes elements, in the first sequence, corresponding to indexes that are the M indexes.

This solution provides a manner of determining the second sequence. For example, elements corresponding to the positions of the reference signal resources may be selected from the first sequence to form the second sequence.

In an implementation, the first information includes a first parameter and/or a first length. The first parameter indicates all or part of coefficients of a polynomial corresponding to a phase of the first sequence. The first length indicates a length of the first sequence. The length of the first sequence may be (pre-)configured, the length of the first sequence may be defined in a standard, or the length of the first sequence may be agreed on by the terminal device and a network device.

In this solution, when the phase of the first sequence is represented by using the polynomial, the first sequence may be indicated by using all or part of the coefficients of the polynomial corresponding to the phase of the first sequence, so that the first sequence can be determined based on the first length and the first parameter. In comparison with that the N elements included in the first sequence are directly indicated, a quantity of bits occupied to indicate the first information is relatively small, so that signaling overhead can be reduced.

In an implementation, the second information includes information about the M indexes, to indicate the positions of the reference signal resources. This is easy to implement and is relatively simple. A value of M may be (pre-)configured, the value of M may be defined in the standard, or the value of M may be agreed on by the terminal device and the network device.

In an implementation, the information about the M indexes includes one or more of the following: a second parameter; a highest degree of a polynomial corresponding to the M indexes; or the M indexes. The second parameter indicates all or part of coefficients of the polynomial corresponding to the M indexes.

When the positions of the reference signal resources may be represented by using a polynomial, the positions of the reference signal resources may also be indicated by using the second parameter and the highest degree of the polynomial corresponding to the M indexes. In comparison with that the M indexes included in the reference signal resources are directly indicated, indication overhead can be reduced.

In an implementation, the second information further includes a reference index. The reference index is an index of an absolute position of the reference resource.

When the M indexes indicated by the second information are M relative indexes, the second information may further include a reference index, so that the terminal device can determine the absolute positions of the reference signal resources based on the reference index.

In an implementation, when the M indexes are the indexes of the relative positions of the reference signal resources with respect to the reference resource, and the reference index is less than or equal to an index of a starting absolute position of the reference signal resources, a sum of an i^{th} index in the M indexes and the reference index is an i^{th} absolute index. The i^{th} absolute index is an i^{th} index in the indexes of the absolute positions of the reference signal resources. i is an integer greater than or equal to 0.

In an implementation, when the M indexes are the indexes of the relative positions of the reference signal resources with respect to the reference resource, and the reference index is greater than or equal to an index of an ending absolute position of the reference signal resources, a difference between the reference index and an i^{th} index in the M indexes is an i^{th} absolute index. The i^{th} absolute index is an i^{th} index in the indexes of the absolute positions of the reference signal resources. i is an integer greater than or equal to 0.

In an implementation, the method further includes: The terminal device sends or receives the reference signal based on the reference signal resources.

The terminal device determines the reference signal based on the determined second sequence, and sends the reference signal on the reference signal resources. Alternatively, the terminal device may receive the reference signal from the network device on the reference signal resources, where the reference signal is determined based on the second sequence.

In an implementation, a k^{th} element in the second sequence is mapped to a reference signal resource corresponding to an r^{th} element in the M indexes. k is equal to r, or a sum of k and r is equal to M-1 or M+1. k is an integer greater than or equal to 0, and r is an integer greater than or equal to 0.

The elements in the second sequence are in one-to-one correspondence/mapping with the positions of the reference signal resources indicated by the M indexes. A specific correspondence is not limited in embodiments of this application, provided that the terminal device and the network device have a consistent understanding of a manner of mapping the second sequence to the reference signal resources. For example, the elements in the second sequence and the M indexes may be sorted, and the k^{th} element in the second sequence after the sorting is mapped to the r^{th} element in the sorted M indexes. Values of k and r are related to a sorting rule of the elements in the second sequence and a sorting rule of the M indexes. Cases are separately described below.

Case 1: The elements in the second sequence and the M indexes are sorted according to a same rule.

In Case 1, k may be equal to r. For example, the M indexes are sorted in ascending order, and the elements in the second sequence are sorted in ascending order of indexes. The k^{th} element in the second sequence after the sorting is mapped to the r^{th} element in the sorted M indexes. k=r. For another example, the M indexes are sorted in descending order, and the elements in the second sequence are sorted in descending order of the indexes. The k^{th} element in the second sequence after the sorting is mapped to the r^{th} element in the sorted M indexes. k=r.

In Case 1, k+r=M-1, or k+r=M+1. For example, the M indexes are sorted in ascending order, and the elements in the second sequence are sorted in ascending order of indexes. The k^{th} element in the second sequence after the sorting is mapped to the r^{th} element in the sorted M indexes. k+r=M-1, or k+r=M+1. For another example, the M indexes are sorted in descending order, and the elements in the second sequence are sorted in descending order of the indexes. The k^{th} element in the second sequence after the sorting is mapped to the r^{th} element in the sorted M indexes. k+r=M-1, or k+r=M+1.

Case 2: The sorting rule of the elements in the second sequence is opposite to the sorting rule of the M indexes. The k^{th} element in the second sequence after the sorting is mapped to the r^{th} element in the sorted M indexes.

In Case 2, k may be equal to r. For example, the M indexes are sorted in ascending order, and the elements in the second sequence are sorted in descending order of indexes. The k^{th} element in the second sequence after the sorting is mapped to the r^{th} element in the sorted M indexes. k=r. For another example, the M indexes are sorted in descending order, and the elements in the second sequence are sorted in ascending order of the indexes. The k^{th} element in the second sequence after the sorting is mapped to the r^{th} element in the sorted M indexes. k=r.

According to a second aspect, an embodiment of this application provides a communication method. The method may be performed by a second communication apparatus. The second communication apparatus may be a combined device, a component, or the like that is configured to implement a function of a network device. For example, the second communication apparatus is the network device, or the second communication apparatus is a unit/module, a circuit, a chip, or the like in the network device. The following describes the method provided in the second aspect by using an example in which the second communication apparatus is the network device.

The communication method includes: The network device sends first information and second information. The first information indicates a first sequence, the second information indicates positions of reference signal resources, and the reference signal resources are non-uniformly distributed in frequency domain. The first sequence and the positions of the reference signal resources are for determining a second sequence, and the second sequence corresponds to a reference signal.

In an implementation, that the second information indicates the positions of the reference signal resources includes: The second information indicates M indexes. The M indexes are indexes of relative positions of the reference signal resources with respect to a reference resource, or the M indexes are indexes of absolute positions of the reference signal resources. M is a positive integer.

In an implementation, the first sequence includes N elements, and the second sequence includes M elements in the N elements. Positions of the M elements in the N elements correspond to the M indexes, and N is a positive integer.

In an implementation, the first information includes a first parameter and/or a first length. The first parameter indicates all or part of coefficients of a polynomial corresponding to a phase of the first sequence. The first length indicates a length of the first sequence.

In an implementation, the second information includes information about the M indexes.

In an implementation, the information about the M indexes includes one or more of the following: a second parameter, a highest degree of a polynomial corresponding to the M indexes, or the M indexes. The second parameter indicates all or part of coefficients of the polynomial corresponding to the M indexes.

In an implementation, the second information further includes a reference index. The reference index is an index of an absolute position of the reference resource.

In an implementation, when the M indexes are the indexes of the relative positions of the reference signal resources with respect to the reference resource, and the reference index is less than or equal to an index of a starting absolute position of the reference signal resources, a sum of an i^{th} index in the M indexes and the reference index is an i^{th} absolute index. The i^{th} absolute index is an i^{th} index in the indexes of the absolute positions of the reference signal resources. i is an integer greater than or equal to 0.

In an implementation, when the M indexes are the indexes of the relative positions of the reference signal resources with respect to the reference resource, and the reference index is greater than or equal to an index of an ending absolute position of the reference signal resources, a difference between the reference index and an i^{th} index in the M indexes is an i^{th} absolute index. The i^{th} absolute index is an i^{th} index in the indexes of the absolute positions of the reference signal resources. i is an integer greater than or equal to 0.

In an implementation, the method further includes: The network device sends or receives the reference signal based on the reference signal resources.

In an implementation, a k^{th} element in the second sequence is mapped to a reference signal resource corresponding to an r^{th} element in the M indexes. k is equal to r, or a sum of k and r is equal to M-1 or M+1. k is an integer greater than or equal to 0, and r is an integer greater than or equal to 0.

For beneficial effects of the second aspect and the implementations of the second aspect, refer to beneficial effects of the first aspect and the implementations of the first aspect. Details are not described herein again.

According to a third aspect, an embodiment of this application provides a communication method. The method may be performed by a first communication apparatus and a second communication apparatus. The first communication apparatus may be a combined device, a component, or the like that is configured to implement a function of a terminal device. For example, the first communication apparatus is the terminal device, or the first communication apparatus is a unit/module, a circuit, a chip, or the like in the terminal device. The second communication apparatus may be a combined device, a component, or the like that is configured to implement a function of a network device. For example, the second communication apparatus is the network device, or the second communication apparatus is a unit/module, a circuit, a chip, or the like in the network device.

For example, the first communication apparatus is the terminal device, and the second communication apparatus is the network device. The communication method includes: The network device sends first information and second information, where the first information indicates a first sequence, the second information indicates positions of reference signal resources, and the reference signal resources are non-uniformly distributed in frequency domain. The terminal device determines a second sequence based on the first sequence and the positions of the reference signal resources, where the second sequence corresponds to a reference signal.

For beneficial effects of the third aspect, refer to beneficial effects of the first aspect and the implementations of the first aspect. Details are not described herein again.

According to a fourth aspect, an embodiment of this application provides a communication apparatus. The communication apparatus has a function of implementing behavior in the method instances in either of the first aspect or the second aspect. For beneficial effects, refer to related descriptions of the first aspect or the second aspect. Details are not described herein again. For example, the communication apparatus may be the terminal device in the first aspect, or the communication apparatus may be an apparatus that can support the terminal device in implementing a function required by the method provided in the first aspect. For example, the communication apparatus may be a chip or a chip system in the terminal device. For another example, the communication apparatus may be the network device in the second aspect, or the communication apparatus may be an apparatus that can support the network device in implementing a function required by the method provided in the second aspect. For example, the communication apparatus may be a chip or a chip system in the network device.

In a possible design, the communication apparatus includes a baseband apparatus and a radio frequency apparatus.

In a possible design, the communication apparatus includes a corresponding means (means) or module configured to perform the method in the first aspect or the second aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method examples in the first aspect or the second aspect. For details, refer to detailed descriptions in the method examples. Details are not described herein again.

According to a fifth aspect, an embodiment of this application provides a communication apparatus. The communication apparatus may be the communication apparatus in the fourth aspect of the foregoing embodiments, or may be a chip or a chip system disposed in the communication apparatus in the fourth aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is caused to perform the method performed by the terminal device in the foregoing method embodiments. For example, the communication apparatus may be the terminal device or a functional module in the terminal device, for example, a baseband chip and a radio frequency chip. Alternatively, when the processor reads the computer program, the instructions, or the data, the communication apparatus is caused to perform the method performed by the network device in the foregoing method embodiments. For example, the communication apparatus may be the network device or a functional module in the network device, for example, a baseband chip and a radio frequency chip.

According to a sixth aspect, an embodiment of this application provides a chip system. The chip system includes a processor, and may further include a communication interface, configured to implement the method in the first aspect or the second aspect. Optionally, the chip system further includes the memory. The memory is configured to store a computer program (which may also be referred to as code or instructions). The processor is configured to invoke the computer program from the memory and run the computer program, to cause a device in which the chip system is installed to perform the method in the first aspect, the second aspect, or any possible implementation of the first aspect or the second aspect. The chip system may include a chip, or may include a chip and another discrete device.

According to a seventh aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method in the first aspect or the second aspect.

In a specific implementation process, the communication apparatus may be a chip, the input circuit may be an input pin, the output circuit may be an output pin, and the logic circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal device like a mobile phone, or the wireless communication device may be a network device like a base station. The interface circuit may be a radio frequency processing chip in the wireless communication device, and the processing circuit may be a baseband processing chip in the wireless communication device.

According to an eighth aspect, an embodiment of this application provides a communication system. The communication system includes a terminal device and a network device. The terminal device is configured to implement a function of the method in the first aspect, and the network device is configured to implement a function of the method in the second aspect.

According to a ninth aspect, an embodiment of this application provides a computer-readable storage medium. The computer-readable storage medium is configured to store a computer program or instructions. When the computer program or the instructions are run, the method in the first aspect, the second aspect, or any implementation of the first aspect or the second aspect is implemented.

According to a tenth aspect, an embodiment of this application further provides a computer program product including instructions. When the instructions are run on a computer, the method in the first aspect, the second aspect, or any implementation of the first aspect or the second aspect is performed.

For beneficial effects of the second aspect to the tenth aspect and the implementations of the second aspect to the tenth aspect, refer to beneficial effects in the first aspect and any implementation of the first aspect.

### BRIEF DESCRIPTION OF DRAWINGS

FIG. 1 is a diagram of an architecture of a communication system according to an embodiment of this application;
FIG. 2A is a diagram of reference signal frequency domain resources whose comb is 8 according to an embodiment of this application;
FIG. 2B is a diagram of reference signal frequency domain resources whose comb is 4 according to an embodiment of this application;
FIG. 2C is a diagram of reference signal frequency domain resources whose comb is 2 according to an embodiment of this application;
FIG. 3A is a diagram of reference signal resources uniformly distributed in frequency domain and a signal of a corresponding reference signal in time domain according to an embodiment of this application;
FIG. 3B is a diagram of reference signal resources non-uniformly distributed in frequency domain and a signal of a corresponding reference signal in time domain according to an embodiment of this application;
FIG. 4 is a schematic flowchart of a communication method 400 according to an embodiment of this application;
FIG. 5A and FIG. 5B each are a diagram of a relationship of a relative index, a reference index, and an absolute index according to an embodiment of this application;
FIG. 6A and FIG. 6B each are a diagram of another relationship of a relative index, a reference index, and an absolute index according to an embodiment of this application;
FIG. 7 is a diagram of a structure of a communication apparatus according to an embodiment of this application; and
FIG. 8 is a diagram of another structure of a communication apparatus according to an embodiment of this application.

### DESCRIPTION OF EMBODIMENTS

In embodiments of this application, for non-uniformly distributed reference signal resources, a design of a reference signal that matches the reference signal resources is provided, so that the reference signal mapped to the reference signal resources has a lower PAPR, thereby reducing reference signal distortion and improving decoding accuracy for a network device. With reference to the accompanying drawings, the following further describes the solutions provided in embodiments of this application.

For example, the technical solutions provided in embodiments of this application may be applied to a communication system related to the 3rd generation partnership project (the 3rd generation partnership project, 3GPP), for example, a long term evolution (long term evolution, LTE) communication system or a 5th generation (sixth generation, 5G) mobile communication system, or may be applied to another next-generation mobile communication system, for example, a 6th generation (6G) communication system, or another similar communication system. The another similar communication system may include a wireless fidelity (wireless fidelity, Wi-Fi) system, a vehicle-to-everything (vehicle-to-everything, V2X) system, an internet of things (internet of things, IoT) system, a narrowband internet of things (narrowband internet of things, NB-IoT) system, or the like.

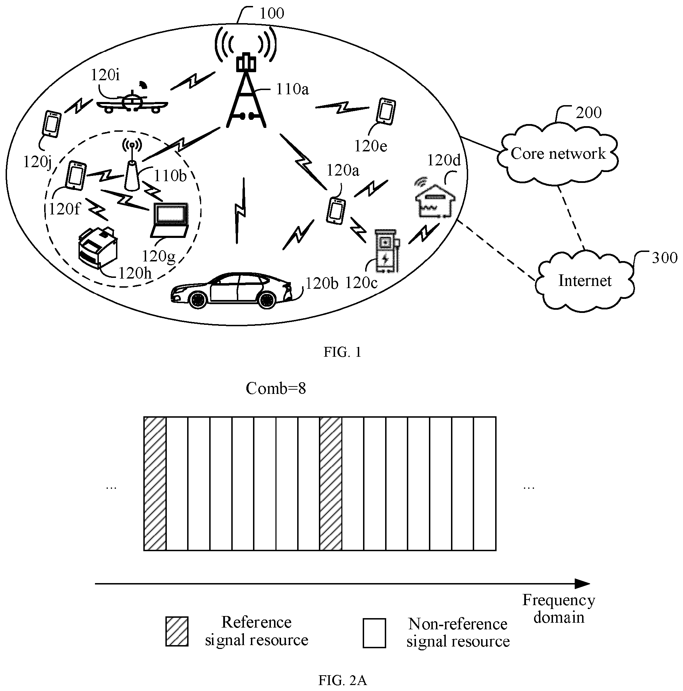

FIG. 1 shows a communication system to which an embodiment of this application is applicable. The communication system includes a radio access network 100 and a core network 200. Optionally, the communication system may further include the Internet 300 (this is used as an example in FIG. 1).

The radio access network 100 may include at least one network device and at least one terminal device. For example, the radio access network 100 includes two network devices 110a and 110b and terminal devices such as 120a to 120j. A network architecture shown in FIG. 1 is merely an example, and there may be fewer or more terminal devices and/or network devices. The communication system described in embodiments of this application is intended to describe the technical solutions in embodiments of this application more clearly, but constitutes no limitation on the communication system to which embodiments of this application are applicable. For example, the communication system may further include other devices, and the other devices include, for example, a wireless relay device and a wireless backhaul device, which are not shown in FIG. 1. A person of ordinary skill in the art may know that with evolution of the network architecture, the technical solutions provided in embodiments of this application are also applicable to similar technical problems. When the technical solutions in embodiments of this application are applied to another communication system, the devices, components, modules, and the like in embodiments may be replaced with corresponding devices, components, and modules in the another communication system. This is not limited.

In embodiments of this application, the network device is the radio access network (radio access network, RAN) device. A RAN may be a 3GPP-related cellular system, for example, a 5G/new radio (new radio, NR) mobile communication system, or a future-oriented evolved system (for example, a 6G mobile communication system). Alternatively, the RAN may be an open access network (open RAN, O-RAN or ORAN), a cloud radio access network (cloud radio access network, CRAN), a virtualized radio access network (virtualized RAN, vRAN), or the like. The RAN may alternatively be a communication system that integrates two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next-generation base station in the 6G mobile communication system, a base station in a future mobile communication system, or the like. The RAN node may be a macro base station, a micro base station, an indoor base station, a relay node, a donor node/host node, a radio controller, or the like. The RAN node may alternatively be a server, a wearable device, a vehicle, a vehicle-mounted device, or the like. For example, a RAN node in a V2X technology may be a road side unit (road side unit, RSU).

In another possible scenario, the RAN node may be a module or unit that completes some functions of a base station; or a plurality of RAN nodes cooperate to assist the terminal device in implementing radio access, and different RAN nodes separately implement some functions of a base station. For example, the RAN node may be a central unit (central unit, CU), a distributed unit (distributed unit, DU), or a radio unit (radio unit, RU). Functions of the CU may be implemented by one entity, or may be implemented by different entities. For example, the functions of the CU may be further divided. To be specific, a control plane and a user plane are separated, and are implemented by different entities, which are a control plane CU entity (namely, a CU-control plane (control plane, CP) entity) and a user plane CU entity (namely, a CU-user plane (user plane, UP) entity). The CU-CP entity and the CU-UP entity may be coupled to the DU, to jointly complete functions of the RAN node. The CU and the DU may be separately disposed, or may be included in a same network element, for example, a baseband unit (baseband unit, BBU).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one unit of the CU (or the CU-CP and the CU-UP), the DU, and the RU in this application may be implemented by using a software module, a hardware module, or a combination of a software module and a hardware module.

The CU and the DU may be configured based on protocol layer functions of a wireless network implemented by the CU and the DU. For example, the CU is configured to implement functions of a packet data convergence protocol (packet data convergence protocol, PDCP) layer and protocol layers (for example, a radio resource control (radio resource control, RRC) layer and/or a service data adaptation protocol (service data adaptation protocol, SDAP) layer) above the PDCP layer. The DU is configured to implement functions of protocol layers (for example, a radio link control (radio link control, RLC) layer, a media access control (media access control, MAC) layer, and/or a physical (physical, PHY) layer) below the PDCP layer. For another example, the CU is configured to implement functions of a protocol layer (for example, an RRC layer and/or an SDAP layer) above a PDCP layer. The DU is configured to implement functions of the PDCP layer and a protocol layer (for example, an RLC layer, a MAC layer, and/or a PHY layer) below the PDCP layer. For specific descriptions of the foregoing protocol layers, refer to a related technical specification of the 3GPP or a technical specification of another applicable communication protocol. Division into processing functions of the CU and the DU based on the protocol layers is merely an example. Division may alternatively be performed in another manner. This is not limited in this application. For example, in a design, the CU or the DU may alternatively have some processing functions of a protocol layer through division. In a design, some functions of the RLC layer and a function of a protocol layer above the RLC layer are set on the CU, and remaining functions of the RLC layer and a function of a protocol layer below the RLC layer are set on the DU.

In embodiments of this application, an apparatus configured to implement a function of the network device may be the network device, or may be an apparatus that can support the network device in implementing the function, for example, a chip system or a combined device or component that can implement a function of the network device. The apparatus may be installed in the network device. A specific technology and a specific device form that are used by the network device are not limited in embodiments of this application.

In embodiments of this application, any device that can perform data communication with the base station may be considered as a terminal device. The terminal device is also referred to as a terminal, a terminal apparatus, user equipment (user equipment, UE), a mobile station, a mobile terminal, or the like. The terminal device may be widely used in various scenarios. For example, the terminal device may be a mobile phone, a computer, a mobile internet device (mobile internet device, MID), a wearable device, a virtual reality (virtual reality, VR) device, an augmented reality (augmented reality, AR) device, a station (station, STA), a robot arm, a camera, a robot, a vehicle, an uncrewed aerial vehicle, a helicopter, an airplane, a ship, or a smart home device (for example, a television, an air conditioner, a vacuum sweeper, a speaker, or a set-top box), a relay (relay), customer-premises equipment (customer-premises equipment, CPE), or a smart car (smart car or intelligent car), a digital car (digital car), an unmanned car (unmanned car, driverless car, pilotless car, or automobile), an autonomous car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), and a road side apparatus (road site unit, RSU). The terminal device may alternatively be a terminal device in an IoT system, for example, a water meter or an electric meter.

If the various terminal devices described above are located on a vehicle (for example, placed/mounted in the vehicle), the terminal devices may be all considered as vehicle-mounted terminal devices. The vehicle-mounted terminal device may be a vehicle-mounted module, a vehicle-mounted assembly, a vehicle-mounted component, a vehicle-mounted chip, or an on board unit that is built in a vehicle as one or more components or units. The vehicle may implement the method in this application through the built-in vehicle-mounted module, vehicle-mounted assembly, vehicle-mounted component, vehicle-mounted chip, or on-board unit. The vehicle-mounted terminal device may be an entire vehicle device, a vehicle-mounted module, a vehicle, an on board unit (on board unit, OBU), a road side unit (road side unit, RSU), an in-vehicle infotainment system (also referred to as an in-vehicle sending unit) (telematics box, T-box), a chip, a system-on-a-chip (system-on-a-chip, SoC), or the like. The chip or the SoC may be mounted in the vehicle, the OBU, the RSU, or the T-box.

In this embodiment of this application, roles of the network device and the terminal device may be relative. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device. In other words, 110a and 120i communicate with each other by using a wireless air interface protocol. Certainly, 110a and 120i may alternatively communicate with each other by using an interface protocol between network devices. In this case, for 110a, 120i is also a network device. Therefore, in this embodiment of this application, the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

In embodiments of this application, an apparatus configured to implement a function of the terminal device may be the terminal device, or may be an apparatus that can support the terminal device in implementing the function, for example, a chip system or a combined device or component that can implement a function of the terminal device. The apparatus may be installed in the terminal device. A specific technology and a specific device form that are used by the terminal device are not limited in embodiments of this application.

When sending data to the terminal device, the network device needs to perform modulation and coding and signal precoding based on CSI of a downlink channel obtained by the network device. In an implementation, the network device may estimate CSI of an uplink channel based on a reference signal sent by the terminal device, and then estimate the CSI of the downlink channel based on the CSI of the uplink channel. Uplink and uplink herein are relative. If the downlink is from the network device to the terminal device, the uplink is from the terminal device to the network device (this is used as an example in embodiments of this application).

The terminal device sends the reference signal (for example, a demodulation reference signal (demodulation reference signal, DMRS) or a sounding reference signal (sounding reference signal, SRS)) to the network device. A sequence carrying the reference signal (also referred to as a reference signal sequence) may be generated based on a ZC sequence. The ZC sequence is generated by performing a cyclic shift α on a base sequence. A ZC sequence ${r}_{u , v}^{\left(α, δ\right)} \left(n\right)$ satisfies the following formula: ${r}_{u , v}^{\left(α, δ\right)} \left(n\right) = {e}^{jαn} \overline{{r}_{u , v}} \left(n\right) , 0 \leq n \leq {M}_{ZC}$ $\overline{{r}_{u , v}} \left(n\right) = {x}_{q} \left(n mod {N}_{ZC}\right)$ ${x}_{q} \left(m\right) = {e}^{- j \frac{πqm \left(m+1\right)}{{N}_{ZC}}}$

*r̅_̅{̅u̅,̅v̅}̅*(*n*) is the base sequence of the ZC sequence. M_{ZC} is a length of the ZC base sequence, and ${M}_{ZC} = {mN}_{sc}^{RB} / {2}^{δ}$ , where m is a quantity of RBs, ${N}_{sc}^{RB}$ is a quantity of subcarriers included in one RB, total resources are ${mN}_{sc}^{RB}$ subcarriers, and a quantity of subcarriers to which the ZC sequence is mapped is 1/2*^{δ}* of a quantity of the total resources. δ = log₂(K_{TC}), where K_{TC} is a transmission comb number. *N_{ZC}* is a length of a root sequence, and is a maximum prime number less than or equal to M_{ZC}. α is a cyclic shift value. n is a number of the ZC sequence. *u* is a group number of a sequence group. For example, *u* ∈ {0, 1, ..., 29}, to indicate that there are 30 sequence groups. *v* is a base sequence number in each sequence group, where for example, v = 0, 1. q represents a root index, where $q = \left⌊\overline{q}+1/2\right⌋ + v \times {\left(-1\right)}^{\left⌊2\overline{q}\right⌋}$, and *q̅* = *N_{ZC}×*(*u +* 1)/31 , to distinguish between different root sequences in a group and distinguish between root sequences in different groups.

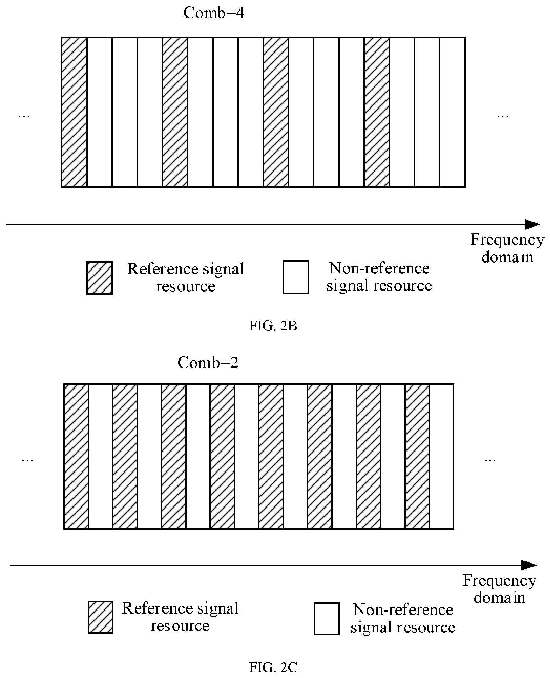

The terminal device maps the reference signal sequence to reference signal resources, and sends the reference signal to the network device on the reference signal resources. In NR, the reference signal resources are arranged at equal intervals or uniformly distributed in frequency domain. To be specific, reference signal resources corresponding to one reference signal port (which may be referred to as a port for short) have same frequency domain densities, in other words, frequency domain densities of reference signal resources corresponding to one port are a same density. A frequency domain density of reference signal resources may be represented by using a comb K_{TC}, that is, one subcarrier in every adjacent K_{TC} subcarriers is a reference signal resource, and every two reference signal resources are separated by K_{TC}-1 subcarriers. K_{TC} is set. For example, K_{TC} is set to 8, and correspondingly, reference signal frequency domain resources are shown in FIG. 2A. K_{TC} is set to 4, and correspondingly, reference signal frequency domain resources are shown in FIG. 2B. K_{TC} is set to 2, and correspondingly, reference signal frequency domain resources are shown in FIG. 2C.

One reference signal port corresponds to one reference signal sequence on one orthogonal frequency division multiplexing (orthogonal frequency division multiplexing, OFDM) symbol (symbol). The reference signal sequence is generated based on the ZC sequence. For example, a ZC sequence ${r}_{u , v}^{\left({α}_{i}, δ\right)} \left(x\right)$ and a reference signal sequence for a port *pᵢ* satisfy the following formula: ${r}^{\left({p}_{i}\right)} \left(x,l′\right) = {r}_{u , v}^{\left({α}_{i}, δ\right)} \left(x\right) , where 0 \leq x \leq {M}_{sc , b}^{SRS} - 1 , l ′ = \left\{0,1,…,{N}_{symb}^{SRS}-1\right\} , and iϵ \left\{0, 1, 2, 3\right\}$

r^{(*pi*)}(*x*, *l*') is a reference signal sequence for the port *pᵢ* on a symbol *l'*. *l'* is an index of a symbol on which a reference signal resource is located, or an index of an (*l'*)^{th} symbol in ${N}_{symb}^{SRS}$ symbols. ${M}_{sc , b}^{SRS}$ is a quantity of subcarriers occupied by reference signal resources, and is also a length of an SRS sequence. ${N}_{symb}^{SRS}$ is a quantity of symbols occupied by a reference signal. An OFDM symbol in embodiments of this application is referred to as a symbol for short. αᵢ is a cyclic shift of the port *pᵢ*. δ = log₂(K_{TC}), where K_{TC} is a transmission comb number. *x* represents an *x*^{th} subcarrier in ${M}_{sc , b}^{SRS}$ subcarriers.

The foregoing formula may also be understood as follows: The reference signal sequence is a ZC sequence whose sequence length is ${M}_{sc , b}^{SRS}$. The reference signal sequence is sequentially mapped to ${M}_{sc , b}^{SRS}$ reference signal resources that are on the symbol *l'* and that are uniformly arranged, and 0s are mapped to non-reference signal resources on the symbol *l'* (that is, the reference signal sequence is not mapped to the non-reference signal resources on the symbol *l'*). Usually, to improve power efficiency of the terminal device, a high power amplifier (high power amplifier, HPA) of the terminal device is required to work near a linear saturation region. In view of this, considering that a transmit power of the terminal device is limited, when data is transmitted by using an OFDM symbol, the reference signal sequence is required to have a lower PAPR. This is because, if the reference signal sequence has a higher PAPR, when the HPA works near a saturation point, there is a particular probability that a signal input to the HPA enters a non-linear region, and consequently, non-linear distortion is generated, which affects decoding accuracy for a receive end. For the ZC sequence, an amplitude/a power of a signal of a ZC sequence of any length is constant, that is, the ZC sequence has a constant envelope property. A sequence obtained through Fourier transform on the ZC sequence is still a ZC sequence. In other words, if a frequency domain signal is a ZC sequence, a time domain signal obtained through transform on the frequency domain signal is still a ZC sequence. Therefore, after Fourier transform, the ZC sequence still has the constant envelope property. In this way, when the reference signal sequence is mapped to reference signal resources uniformly distributed in frequency domain, the reference signal may have a lower PAPR.

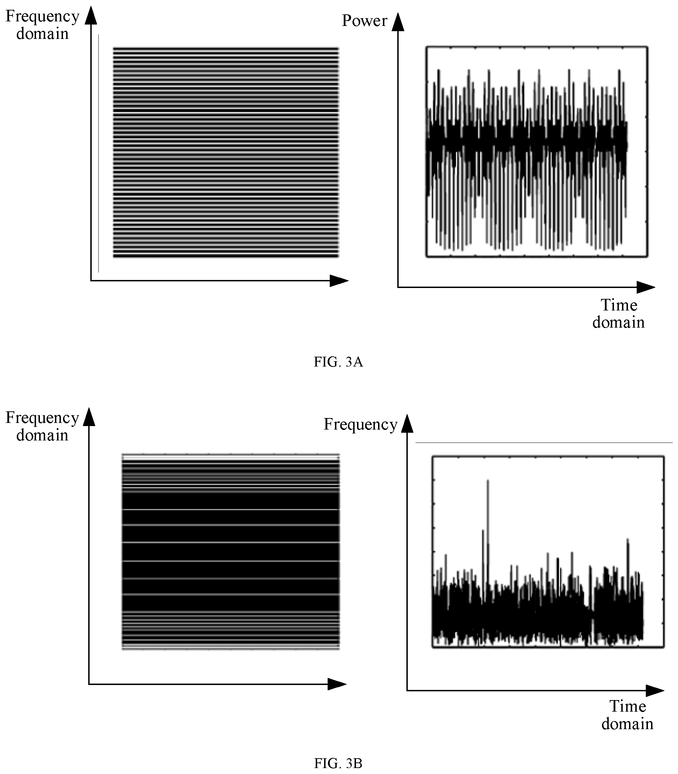

As the scale of antenna arrays increases, a quantity of reference signal ports increases correspondingly. Maintaining uniformly arranged reference signal resources would result in high resource overhead. To reduce the resource overhead, a design with sparse, non-uniformly arranged reference signal resources has been proposed. In this case, CSI with higher accuracy may also be obtained based on auxiliary information/prior information. The auxiliary information may be some information obtained in advance for estimating the CSI. The non-uniformly arranged reference signal resources mean that resources occupied by a reference signal sequence corresponding to each reference signal port are non-uniformly distributed in frequency domain and/or time domain. Reference signal resources non-uniformly arranged in frequency domain may also be understood as that there are at least two frequency domain densities of reference signal resources corresponding to each reference signal port. A frequency domain density is a proportion of a frequency domain resource for carrying a reference signal in a unit frequency domain resource. For example, for ease of understanding, refer to FIG. 3A and FIG. 3B. FIG. 3A is a diagram of positions of reference signal resources uniformly distributed in frequency domain and a time domain signal of a corresponding reference signal. FIG. 3B is a diagram of positions of reference signal resources non-uniformly distributed in frequency domain and a time domain signal of a corresponding reference signal. A left figure in FIG. 3A shows reference signal resources uniformly distributed in frequency domain, and a left figure in FIG. 3B shows reference signal resources non-uniformly distributed in frequency domain. For ease of description, the following uses an example in which non-uniformly distributed reference signal resources are reference signal resources non-uniformly distributed in frequency domain.

For the non-uniformly distributed reference signal resources, for example, for the reference signal resources non-uniformly distributed in frequency domain, if a ZC sequence that matches uniformly distributed reference signal resources is still used, a peak may occur in time domain (that is, a PAPR is significantly increased). Consequently, reference signal distortion is caused, and decoding accuracy for a receive end is affected.

It can be learned from FIG. 3A that a ZC sequence is mapped to the reference signal resources uniformly distributed in frequency domain; and a PAPR of a time domain signal obtained through Fourier transform is approximately equal to 2.7228 dB. It can be learned from FIG. 3B that a ZC sequence is mapped to the reference signal resources non-uniformly distributed in frequency domain; and a PAPR of a time domain signal obtained through Fourier transform is approximately equal to 12.9648 dB. It can be found from comparison between FIG. 3A and FIG. 3B that, if a current reference signal design and a design of reference signal resources non-uniformly distributed in frequency domain are still used, the reference signal has a higher PAPR. Consequently, reference signal distortion is caused, and the decoding accuracy for the receive end is affected.

To resolve the foregoing problem, solutions in embodiments of this application are provided. In embodiments of this application, for reference signal resources non-uniformly distributed in frequency domain, a design of a reference signal that matches the reference signal resources is provided, so that the reference signal mapped to the reference signal resources has a lower PAPR, thereby reducing reference signal distortion and improving decoding accuracy for a network device.

In embodiments of this application, the reference signal may be a demodulation reference signal (demodulation reference signal, DMRS), a sounding reference signal (sounding reference signal, SRS), a channel state information reference signal (channel state information reference signal, CSI-RS), another uplink reference signal, or another downlink reference signal.

A reference signal port is also referred to as a port or an antenna port, is a logical concept, and is usually associated with a reference signal. For example, it may be considered that the antenna port is a transceiver interface on a channel through which the reference signal passes. A set including a plurality of antenna ports is referred to as a port group. In a possible design, a plurality of digital ports of a network device may be grouped to form a plurality of port groups. In a possible design, one reference signal resource has a plurality of ports (or digital ports), and corresponds to one port group (or digital port group). A plurality of reference signal resources respectively correspond to a plurality of port groups. In a possible design, a plurality of reference signal resources correspond to one port group. In another possible design, the port group includes antenna ports corresponding to antennas connected to a plurality of digital ports. The plurality of digital ports may be a plurality of digital ports corresponding to a same analog beam, and one port group corresponds to one analog beam. Alternatively, the plurality of digital ports may be digital ports corresponding to a plurality of analog beams, and one port group corresponds to a plurality of analog beams. A plurality of digital ports corresponding to a same analog beam are divided into a plurality of subsets, each subset corresponds to one port group, one port group corresponds to one analog beam, and the port group includes an antenna port corresponding to an antenna connected to a digital port in the subset. Optionally, the port group may alternatively be described as a digital-analog port group.

Indexes of absolute positions of reference signal resources are also referred to as absolute position indexes of the reference signal resources, and are referred to as absolute indexes of the reference signal resources for short. The "index of the absolute position", the "absolute position index", and the "absolute index" are interchangeable. Indexes of relative positions of the reference signal resources with respect to a reference resource are also referred to as relative position indexes of the reference signal resources, and are referred to as relative indexes of the reference signal resources for short. The "index of the relative position", the "relative position index", and the "relative index" are interchangeable. It may be understood that an absolute index of a same reference signal resource A and a relative index of the reference signal resource A are separated by one reference index, and the reference index is an index of an absolute position of a reference resource. An index of a starting absolute position of the reference signal resources is also referred to as a starting absolute position index, and is referred to as a starting absolute index for short. An index of a starting absolute position of the reference signal resources is also referred to as an ending absolute position index, and is referred to as an ending absolute index for short.

In embodiments of this application, "when", "if", and "in case" mean that an apparatus performs corresponding processing in an objective situation, are not intended to limit time, do not require the apparatus to necessarily have a determining action during implementation, and do not mean another limitation. Unless otherwise specified, "if" and "in case" are interchangeable, and "when" and "in a case of" are interchangeable. "When" and "if"/"in case" are interchangeable.

In embodiments of this application, terms such as "example" or "for example" are used to represent giving an example, an illustration, or a description. Any embodiment or design solution described as an "example" or "for example" in this application should not be explained as being more preferred or having more advantages than another embodiment or design solution. Exactly, use of the term like "example" or "for example" is intended to present a related concept in a specific manner.

In this specification, "indicate" may include "directly indicate" and "indirectly indicate". For example, when a piece of indication information is described as indicating information I, the indication information may directly indicate I or indirectly indicate I, but it does not necessarily indicate that the indication information carries I.

The information indicated by the indication information is referred to as to-be-indicated information. In a specific implementation process, the to-be-indicated information may be indicated in a plurality of manners. For example, the to-be-indicated information may be directly indicated, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overhead to some extent. In addition, a common part of all pieces of information may be identified and indicated in a unified manner, to reduce indication overhead caused by separately indicating same information. For example, a person skilled in the art should understand that a precoding matrix includes precoding vectors, and the precoding vectors in the precoding matrix may have a same part in terms of composition or other attributes.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In embodiments of this application, "sending" and "receiving" represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "outputting" of a chip interface, and the "receiving" may alternatively be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination end, but the destination end may understand valid information from the source. Similar expressions in this application may be understood similarly. Details are not described again.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first sequence and a second sequence are two different sequences, and do not indicate different content, priorities, importance degrees, or the like of the two sequences. For a type of technical feature, technical features in the type of technical feature are distinguished by using "A", "B", "C", "D", and the like, and there is no sequence or order between the technical features described by "A", "B", "C", and "D". For example, a mapping rule A and a mapping rule B in this specification are merely intended to distinguish between different content, and do not limit a sequence or an order, and priorities, importance degrees, or the like of the mapping rule A and the mapping rule B.

The following describes, with reference to the accompanying drawings, the solutions provided in embodiments of this application. The following descriptions use an example in which a communication method provided in embodiments of this application is applied to the network architecture shown in FIG. 1. The network architecture and an application scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new application scenarios, the technical solutions provided in embodiments of this application are also applicable to similar technical problems.

The following describes the communication method by using an example in which the communication method provided in embodiments of this application is performed by the network device and the terminal device. Steps performed by the network device may be implemented by a RAN device, or may be implemented by a component (for example, a module like a baseband chip, or another processing unit or processor) in the RAN device. For example, the network device may be the network device in FIG. 1, for example, the network device 110a, or may be a chip (system) in the network device in FIG. 1. Steps performed by the terminal device may be implemented by the terminal device, or may be implemented by a component (for example, a module like a chip, a processing unit, or a processor) in the terminal device. The terminal device may be the terminal device shown in FIG. 1, for example, the terminal device 120a, or may be a chip (system) in the terminal device in FIG. 1.

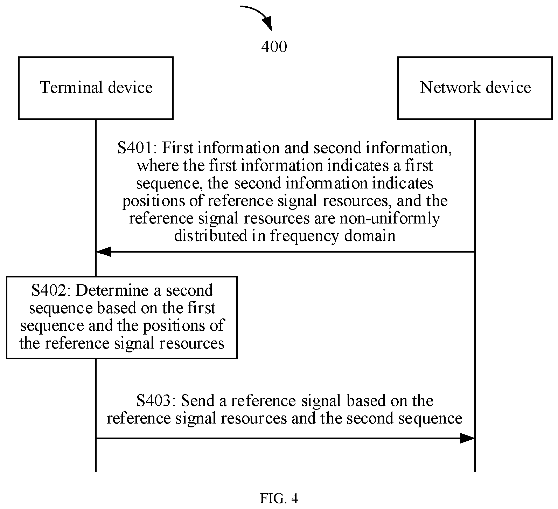

FIG. 4 is a schematic flowchart of a communication method 400 according to an embodiment of this application. In FIG. 4, the method is described from the perspective of interaction between a network device and a terminal device. It should be understood that the communication method 400 may alternatively be implemented by another apparatus, for example, a chip or a communication apparatus that has a communication function. It should be noted that, this embodiment of this application merely uses an example in which the method is performed by the network device and the terminal device, but the method is not limited to being performed by the network device and the terminal device. For example, in this embodiment of this application, the method may alternatively be performed by using more terminal devices. When more terminal devices are involved, all of the more terminal devices perform a same procedure. As shown in FIG. 4, a procedure of the communication method 400 includes the following steps.

S401: The network device sends first information and second information, where the first information indicates a first sequence, the second information indicates positions of reference signal resources, and the reference signal resources are non-uniformly distributed in frequency domain. Correspondingly, the terminal device receives the first information and the second information. The first information and the second information may be carried in one piece of signaling, or the first information and the second information may be carried in different pieces of signaling.

The first sequence may be for generating a sequence corresponding to a reference signal (also referred to as a reference signal sequence). For example, the first sequence may be a ZC sequence. In some embodiments, the first sequence may alternatively be another type of sequence provided that the sequence can be for carrying the reference signal. The network device may configure the first sequence for the terminal device. For example, the network device sends the first information to the terminal device, where the first information may indicate the first sequence. A specific name of the first information is not limited in embodiments of this application. The first information may be carried in one or more of RRC signaling, downlink control information (downlink control information, DCI), or a MAC control element (control element, CE).

The first information may directly indicate the first sequence, or may indirectly indicate the first sequence. A specific implementation in which the first information indicates the first sequence is not limited in embodiments of this application. For ease of description, the following uses an example in which the first sequence includes N elements, where N is a positive integer.

**Direct indication manner:** The first information includes the N elements. Correspondingly, the terminal device may directly determine the first sequence based on the first information, so that complexity is lower.

**Indirect indication manner:** The first information includes a first parameter and/or information about a first length. The first length is a length of the first sequence. The first parameter may indicate all or part of coefficients of a polynomial corresponding to a phase of the first sequence. Correspondingly, the terminal device may determine the first sequence based on the first parameter and the first length. In some embodiments, the phase of the first sequence may be represented by using the polynomial. In this case, the first sequence may be indicated based on the first parameter and the first length, so that the first information occupies a relatively small quantity of bits, and signaling overhead can be reduced.

The first length may alternatively be understood as a quantity of elements included in the first sequence. For example, the first sequence includes the N elements, and a value of the first length is N. The first length may be (pre-)configured, the first length may be defined in a standard, or the first length may be agreed on by the terminal device and the network device. In this case, the first information may not include the information about the first length.

The first parameter may include all or part of the coefficients of the polynomial corresponding to the phase of the first sequence. For example, the first sequence is ZC(n), n is a number of the first sequence, and a phase *φ*(*n*) of ZC(*n*) satisfies: *φ*(*n*) = *a*₂*n*² + *a*₁*n. ZC(n)* satisfies the following formula: *ZC*(*n*) = *e*^{*-j*2*πφ*(*n*)/M*L*}, where 0 ≤ *n* ≤ *N_{L} - 1, N_{L}* is the first length, and *M_{L}* is a maximum prime number less than or equal to *N_{L}.* All the coefficients of the polynomial corresponding to the phase of the first sequence are: *a*₁ and *a*₂*ε*{0, 1, 2, *... , M_{L} -* 1}. In this case, the first parameter may include *a*₁ and/or *a*₂. The terminal device may determine ZC(*n*) based on *a*₁*, a*₂, and *N_{L}.*

Alternatively, the first parameter is information indicating all or part of the coefficients of the polynomial corresponding to the phase of the first sequence. The foregoing example is still used. A coefficient of *φ*(*n*) corresponds to at least one index, and the first parameter may be all or part of the at least one index. A specific implementation form of the first parameter is not limited in embodiments of this application. For example, the first parameter may be Table 1. When the first information includes the first parameter, the first information may include Table 1 or indexes in Table 1, or the first information includes one index in a 1^{st} column in Table 1.

**Table 1**

| Index | *a*₂ | *a*₁ |
|---|---|---|
| 0 | 1 | 1 |
| 1 | 2 | 2 |
| ... | ... | ... |
| *M_{L}* | *M_{L} -* 1 | *M_{L} -* 1 |

It should be noted that the foregoing uses an example in which *φ*(*n*) is a quadratic polynomial. In some embodiments, *φ*(*n*) may be a polynomial of a higher degree. For example, *φ*(*n*) is a polynomial of a degree D, where D is an integer greater than 2.

The phase *φ*(*n*) of the first sequence may also be represented by using the polynomial of the degree D (D is greater than 2). In an example, *B*(*n*) = *e*^{-*j*2*πφ*(*n*)/*ML*}, where 0 ≤ *n* ≤ *N_{L}* - 1.

*B*(*n*) represents the first sequence. *φ*(*n*) represents the phase of the first sequence, and *φ*(*n*) = *φ_{dB}n^{dB}* + *φ*_{*dB-*1}*n*^{*dB-*1} + ··· + *φ*₁*n* + *φ*₀, where *φ_{dB}∈*{1, 2, ... , *M_{L}* - 1}, polynomial coefficients *φ*₀, *φ*₁, ... , *φ*_{*dB*-1}*∈*{0, 1, 2, ... , *M_{L}* - 1}, a polynomial highest degree *d_{B}∈*{3, 4, ... }, *d_{B}* = *D*, *M_{L}* is the maximum prime number less than or equal to *N_{L}*, and *N_{L}* represents the length of the first sequence, and is a positive integer, that is, *N_{L}*ε{1, 2, 3, ...}.

It may be understood that the first sequence is applicable to uniformly distributed reference signal resources. As shown in the foregoing background, when the reference signal resources are non-uniformly distributed, if the first sequence is used as the reference signal sequence, the reference signal has a higher PAPR. In view of this, in this embodiment of this application, the network device may indicate the positions of the reference signal resources to the terminal device based on the second information, so that the terminal device generates the reference signal sequence (namely, a second sequence in this specification) based on the positions of the reference signal resources and the first sequence. In this way, it may be considered that the second sequence matches the positions of the reference signal resources. Even if the reference signal resources are non-uniformly distributed, the reference signal mapped to the reference signal resources can have a lower PAPR. It should be noted that the reference signal resources being non-uniformly distributed means the reference signal resources being non-uniformly distributed in time domain and/or frequency domain. For ease of description, the following uses an example in which the reference signal resources are non-uniformly distributed in frequency domain.

It may be understood that the positions of the reference signal resources may be represented by using patterns of the reference signal resources. A pattern of a reference signal resource may represent a relative position relationship between the reference signal resource and a non-reference signal resource. A first resource is used as an example. The first resource includes reference signal resources and non-reference signal resources, and patterns of the reference signal resources may indicate positions of the reference signal resources in the first resource. Therefore, the positions of the parameter signal resources may be indicated by indicating the patterns of the parameter signal resources. The positions of the reference signal resources may also be understood as the patterns/patterns (pattern) of the reference signal resources. That the second information indicates the positions of the reference signal resources may be replaced with that the second information indicates the patterns of the reference signal resources.

How the second information indicates the positions of the reference signal resources is not limited in embodiments of this application. In addition, a specific name of the second information is not limited in embodiments of this application. The second information may be carried in one or more of RRC signaling, DCI, or a MAC CE.

In an example, the second information may indicate M indexes, the M indexes are relative position indexes or absolute position indexes of the reference signal resources, and M is a positive integer. The relative position indexes of the reference signal resources are indexes of relative positions of the reference signal resources with respect to a reference resource. The absolute position indexes of the reference signal resources are indexes of absolute positions of the reference signal resources. When the M indexes are the relative position indexes of the reference signal resources, manners of calculating an absolute position index of any reference signal resource vary with positions of the reference resource. For example, when a reference index is less than or equal to a starting absolute position index of the reference signal resources, a sum of an i^{th} index in the M indexes and the reference index is an i^{th} absolute position index. The reference index is an index of an absolute position of the reference resource. The i^{th} absolute index is an i^{th} index in M absolute position indexes of the reference signal resources. i is an integer greater than or equal to 0. Similarly, when the reference index is greater than or equal to an ending absolute position index of the reference signal resources, a difference between the reference index and an i^{th} index in the M indexes is an i^{th} absolute index.

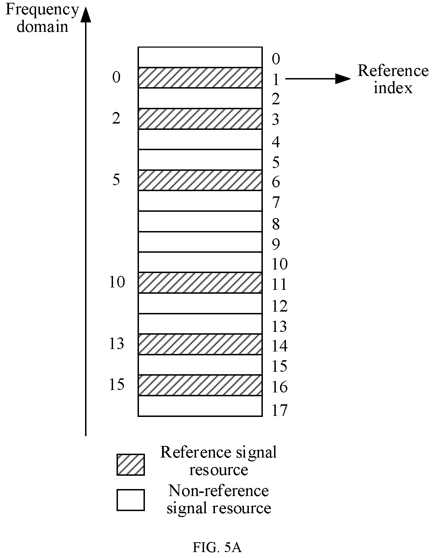

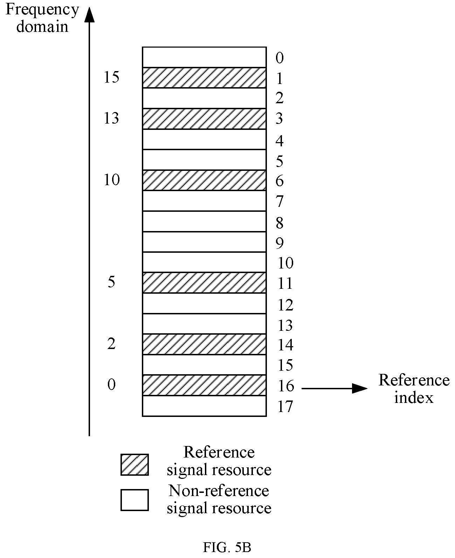

For ease of understanding, the following provides descriptions with reference to FIG. 5A and FIG. 5B. FIG. 5A and FIG. 5B each are a diagram of a relationship of a relative index, a reference index, and an absolute position index. In FIG. 5A, an example in which the reference index is equal to the starting absolute position index of the reference signal resources is used. In FIG. 5B, an example in which the reference index is equal to the ending absolute position index of the reference signal resources is used. In FIG. 5A and FIG. 5B, an example in which indexes start from 0 and the absolute position indexes of the reference signal resources include {1, 3, 6, 11, 14, 16} is used. A sorting order of relative indexes corresponds to an ascending order of absolute indexes. It is assumed that the M indexes included in the second information are the relative position indexes, and as shown in FIG. 5A, the M indexes are {0, 2, 5, 10, 13, 15}. When the reference index is an absolute position index 1, absolute indexes {1, 3, 6, 11, 14, 16} of the reference signal resources may be determined based on {0, 2, 5, 10, 13, 15}. It is assumed that the M indexes included in the second information are the relative position indexes, and as shown in FIG. 5B, the M indexes are {15, 13, 10, 5, 2, 0}. When the reference index is an absolute position index 16, absolute position indexes {1, 3, 6, 11, 14, 16} of the reference signal resources may be determined based on {15, 13, 10, 5, 2, 0}.

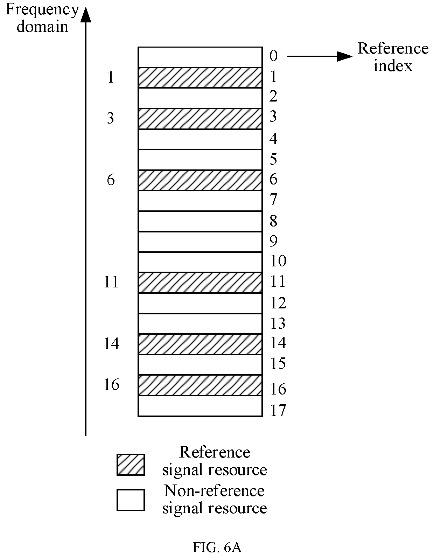

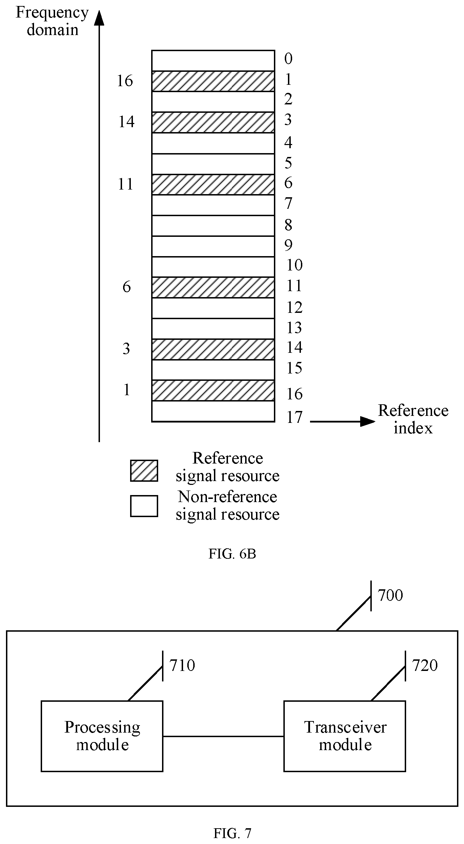

It should be noted that, in FIG. 5A, the example in which the reference index is equal to the starting absolute position index of the reference signal resources is used. In FIG. 5B, the example in which the reference index is equal to the ending absolute position index of the reference signal resources is used. Alternatively, the reference index may be less than the starting absolute position index of the reference signal resources, as shown in FIG. 6A. For another example, the reference index may alternatively be greater than the ending absolute position index of the reference signal resources, as shown in FIG. 6B.

As shown in FIG. 6A, it is assumed that the reference index is 0, and M relative position indexes are {1, 3, 6, 11, 14, 16}. When the reference index is the absolute position index 0, M absolute position indexes {1, 3, 6, 11, 14, 16} of the reference signal resources may be determined based on {1, 3, 6, 11, 14, 16}. As shown in FIG. 6A, it is assumed that the reference index is 17, and M relative position indexes are {16, 14, 11, 6, 3, 1}. When the reference index is the absolute position index 17, M absolute position indexes {1, 3, 6, 11, 14, 16} of the reference signal resources may be determined based on {16, 14, 11, 6, 3, 1}.

The second information may directly indicate the M indexes, or may indirectly indicate the M indexes. A specific implementation in which the second information indicates the M indexes is not limited in embodiments of this application. For example, the second information may include a value of M and/or information about the M indexes. The terminal device may determine the positions of the reference signal resources based on the value of M and the information about the M indexes.

**Direct indication manner:** The second information includes the M indexes. Correspondingly, the terminal device may directly determine the positions of the reference signal resources based on the M indexes, so that complexity is lower.

**Indirect indication manner:** The second information includes information indicating the M indexes. For example, the second information may include one or more of the following: a second parameter and a highest degree of a polynomial corresponding to the M indexes. The second parameter indicates all or part of coefficients of the polynomial corresponding to the M indexes. In some embodiments, the M indexes may be represented by using the polynomial. In this case, the M indexes may be indicated based on the value of M and the second parameter, so that the second information occupies a relatively small quantity of bits, and signaling overhead can be reduced. Correspondingly, the terminal device may determine the positions of the reference signal resources based on the value of M and the second parameter. The value of M may be (pre-)configured, the value of M may be defined in the standard, or the value of M may be agreed on by the terminal device and the network device. When the value of M is set, the second information may further include the value of M.

The M indexes are represented by using a sequence *P*(*n*)*. P*(*n*)*ε*{0, 1, ... , *N_{P} -* 1}, where 0 ≤ n ≤ *N_{P}* - 1, and *N_{P}=*M*.* Assuming that *P*(*n*) is a polynomial of a degree ***p_{dP}**, P*(*n*) can satisfy the following formula: $P \left(n\right) = {p}_{{d}_{P}} {n}^{{d}_{P}} + ⋯ + {p}_{1} n + {p}_{0} , where 0 \leq n \leq {N}_{P} - 1 , and {N}_{P} = M$

The sequence *P(n)* is also referred to as a reference signal resource position sequence *P(n),* and is referred to as a third sequence *P*(*n*) for short in this specification. It may be understood that the third sequence *P*(*n*) may represent the M indexes. d_{P} is a highest degree of *P(n),* and d_{P}ε{1, 2, 3, ... }. p₀, p₁, ... , p_{dP-1}, p_{dP} are coefficients of *P*(*n*)*.* N_{P} is a length of *P(n),* or is a quantity of elements included in *P*(*n*), that is, M. In this case, the second parameter may include one or more of p₀, p₁, ... , p_{dP-1}, p_{dP}. In this embodiment of this application, the positions of the reference signal resources may be indicated by using the second parameter and the highest degree of the polynomial corresponding to the M indexes, to reduce signaling overhead. Certainly, the patterns of the reference signal resources may also be indicated by using the M indexes. This is relatively simple, and can reduce processing complexity of the terminal device.

When the M indexes are the relative position indexes of the reference signal resources, the second information may further include the reference index, so that the terminal device can determine the absolute positions of the reference signal resources based on the reference index. Optionally, the reference index may be predefined, or the reference index may be agreed on by the network device and the terminal device. In this case, even if the M indexes are the relative position indexes of the reference signal resources, the second information may not include the reference index.

S402: The terminal device determines the second sequence based on the first sequence and the positions of the reference signal resources.

The second sequence may also be referred to as the reference signal sequence. After obtaining the first sequence and the positions of the reference signal resources, the terminal device may generate the second sequence, where the second sequence matches the positions of the reference signal resources. "Matching" herein means that the second sequence is applicable to the positions of the reference signal resources. Even if the positions of the reference signal resources indicate that the reference signal resources are non-uniformly distributed in frequency domain, sending the reference signal based on the reference signal resources and the second sequence can also cause the reference signal to have the lower PAPR.

The second sequence is related to the first sequence and the positions of the reference signal resources. This may also be considered as that the second sequence is related to the first sequence and the M indexes. For example, the M indexes may be represented by using a polynomial of the third sequence *P*(n). From this perspective, that the second sequence is related to the first sequence and the M indexes may be replaced with that the second sequence is related to the first sequence and the third sequence *P(n)* or the second sequence may be determined based on the first sequence and the third sequence *P(n).* For example, the second sequence *S(n)* = *f*(*ZC*(*n*), *P*(*n*))*,* where *f* is a mapping relationship, *ZC(n)* is the first sequence, and *P(n)* is also referred to as the reference signal resource position sequence *P(n).*

For example, the first sequence is the ZC sequence, and the phase *φ*(*n*) of *ZC(n)* satisfies: *φ*(*n*) *= a*₂*n*² + *a*₁*n. ZC(n)* satisfies the following formula: *ZC(n)* = *e*^{-*j*2*πφ*(*n*)/M*L*}, where 0 ≤ n ≤ *N_{L} -* 1, *N_{L}*ε{1, 2, 3, ...}, *N_{L}* is the first length, that is, N, and *M_{L}* is the maximum prime number less than or equal to *N_{L}.* Coefficients of a 1^{st}-degree term and a 2^{nd}-degree term in the polynomial corresponding to the phase of the first sequence are respectively: *a*₁ and *a*₂*ε*{0*,* 1, 2, *... , M_{L} -* 1}. The second sequence *S(n)* = *e*^{*-j*2*πφs*(*n*)/*Ms*}, where 0 ≤ n ≤ *N_{S}* - 1, and *N_{S}* is a length of *S(n)* or is a quantity of elements included in *S(n)* (that is, M). The phase of *S(n)* is: *φₛ*(*n*) = *φ*(*P*(*n*)) = *a*₂*P*²(*n*) + *a*₁*P*(*n*),where M_{S} = *M_{L}*. Alternatively, *S*(*n*) = *ZC*(*P*(*n*)) *= e*^{-*j*2*πφ*(P(n))/M*L*} = *e*^{*-j*2*π*(*a*2*P*2(*n*)*+a*1*P*(*n*))/M}*^{L}.*

*P(n)* is represented by using a polynomial. For example, *P(n)* = *p_{dP}n^{dP}* + ··· + *p*₁*n* + *p*₀, where 0 ≤ n ≤ *N_{P} - 1, d_{P}* is a highest degree of the polynomial, and *p_{dP}*, ... , *p*₀ are coefficients of the polynomial. *N_{S} = N_{P}*, and *N_{P}* is a length of *P*(*n*)*. φₛ*(*n*) may be a polynomial of a degree **2***d_{P}*, and a polynomial coefficient of *φₛ*(*n*) may not be an integer. For example, *φₛ*(*n*) satisfies:

When *P*(*n*) is represented by using a polynomial of a degree d, *φₛ*(*n*) is a polynomial of a degree 2×d, as shown in Table 2.

**Table 2**

| *P*(*n*) | Phase of *S*(*n*) |
|---|---|
| Quadratic polynomial | Quartic polynomial |
| Cubic polynomial | Sextic polynomial |

The first sequence includes the N elements, and the second sequence may include M elements in the N elements. Positions of the M elements in the N elements correspond to the M indexes, and N is greater than or equal to a largest value in the M indexes. Alternatively, *S(n)* includes elements, in *ZC(n),* corresponding to indexes that are *P(n).*

For example, a first resource is used as an example. The first resource includes reference signal resources and non-reference signal resources. Absolute indexes corresponding to the first resource are {0, 1, 2, 3, 4, 5, 6, 7, 8, 9, 10, 11, 12, 13, 14, 15, 16, 17}, and M indexes of the reference signal resources are {1, 3, 6, 11, 14, 16}. It is assumed that *a*₂=1, *a*₁*=*1, *N_{L} =* 18, M_{L}=17, the first sequence is *e*^{-*j*2*πφ*(*n*)/M*L*}, *φ*(*n*) = *n*² + *n,* and n is a number of the first sequence. The first sequence is {*e*^{*-j*2*π*×0/17}, ..., *e*^{-*j*2*π*×17/17}}, and the second sequence includes elements, in the first sequence, corresponding to the M indexes. When n is 1 in the M indexes, *φ*(*n*) = 2, and a corresponding element is *e*^{*-j*2*π*×2/17}*.* When n is 3 in the M indexes, *φ*(*n*) = 12, and a corresponding element is e^{*-j*2*π*×12/17}. When n is 6 in the M indexes, *φ*(*n*) = 42, and a corresponding element is *e*^{*-j*2*π*×42/17}*.* When n is 11 in the M indexes, *φ*(*n*) *=* 132, and a corresponding element is *e*^{*-j*2*π*×132/17}*.* When n is 14 in the M indexes, *φ*(*n*) = 210, and a corresponding element is e^{-*j*2*π*×210/17}. When n is 16 in the M indexes, *φ*(*n*) = 272, and a corresponding element is *e*^{*-j*2*π*×272/17}*.* In other words, the second sequence is {e^{*-j*2*π*×2/17}, e^{*-j*2*π*×12/17}, e^{*-j*2*π*×42/17}, e^{*-j*2*π*×132/17}, *e*^{*-j*2*π×*210/17}, e^{*-j*2*π*×272/17}}. It can be learned that indexes of positions, of the six elements included in the second sequence, in the 18 elements of the first sequence are the M indexes of the reference signal resources.

Alternatively, the first sequence may be represented by using a polynomial of a degree D (D>2). In an example, $B \left(n\right) = {e}^{- \frac{j 2 πφ \left(n\right)}{{M}_{L}}}$, where 0 ≤ n ≤ *N_{L} -* 1*. B*(*n*) represents the first sequence. *φ*(*n*) represents the phase of the first sequence, and *φ*(*n*) *= φ_{dB}n^{d} + φ*_{*d-*1}*n*^{*dB-*1} + ··· + *φ*₁*n* + *φ*₀, where *φ_{dB}∈*{1, 2, *... , M_{L}* - 1}, *φ*₀, *φ*₁, *... , φ*_{*dB-*1}*∈*{0, 1, 2, *... , M_{L} -* 1}, *d_{B}∈*{3, 4, ... }, d_{B} = *D, M_{L}* is the maximum prime number less than or equal to *N_{L}*, *and N_{L}* represents the length of the first sequence, and is a positive integer, that is, *N_{L}*ε{1, 2, 3, ...}.

The second sequence $S \left(n\right) = {e}^{- \frac{j 2 {πφ}_{S} \left(n\right)}{{M}_{S}}}$, where 0 ≤ *n* ≤ *N_{S} -* 1, and *N_{S}* is a length of *S(n)* or is a quantity of elements included in *S(n)* (that is, M). The phase of *S(n)* is: *φₛ*(*n*) = *φ*(*P*(*n*)) = *φ_{d}*(*P*(*n*))*^{dB} + φ*_{*dB-*1}*P*(*n*)^{*dB-*1} + ··· + *φ*₁*P*(*n*) + *φ*₀. M_{S} *= M_{L}.* It may also be understood as that $S \left(n\right) = ZC \left(P\left(n\right)\right) = {e}^{- j 2 πφ \left(P\left(n\right)\right) / {M}_{L}} = {e}^{- j 2 π \left({φ}_{{d}_{B}}{\left(P\left(n\right)\right)}^{{d}_{B}}+{φ}_{{d}_{B} - 1}P{\left(n\right)}^{{d}_{B} - 1}+⋯+{φ}_{1}P\left(n\right)+{φ}_{0}\right) / {M}_{L}}$ *.*

*P(n)* is represented by using a polynomial. For example, *P(n)* = *p_{dP}n^{dP}* + ··· + *p*₁*n* + *p*₀, where 0 ≤ n ≤ *N_{P} - 1, d_{P}* is a highest degree of the polynomial, and *p_{dP}*, ... , *p*₀ are coefficients of the polynomial. *N_{S} = N_{P}*, and *N_{P}* is a length of *P*(*n*)*.* Assuming that the phase of the first sequence is a polynomial of a degree *d_{B}*, *φₛ*(*n*) may be a polynomial of a degree d_{B} ** d_{P}*, and a polynomial coefficient of *φₛ*(*n*) may not be an integer. For example, *φₛ*(*n*) satisfies: $\begin{matrix}{φ}_{s} \left(n\right) = φ \left(P\left(n\right)\right) \\ = {φ}_{{d}_{B}} {\left({p}_{{d}_{P}}{n}^{{d}_{P}}+⋯+{p}_{1}n+{p}_{0}\right)}^{{d}_{B}} + {φ}_{{d}_{B} - 1} {\left({p}_{{d}_{P}}{n}^{{d}_{P}}+⋯+{p}_{1}n+{p}_{0}\right)}^{{d}_{B} - 1} + ⋯ \\ + {φ}_{1} \left({p}_{{d}_{P}}{n}^{{d}_{P}}+⋯+{p}_{1}n+{p}_{0}\right) + {φ}_{0}\end{matrix}$

When *P*(*n*) is represented by using a polynomial of a degree d, and the phase of the first sequence is a polynomial of a degree k, *φₛ*(*n*) is a polynomial of a degree k×d, as shown in Table 3.

**Table 3**

| *P*(*n*) | Phase of the first sequence | Phase of *S*(*n*) |
|---|---|---|
| Quadratic polynomial | Cubic polynomial | Sextic polynomial |
| Cubic polynomial | Cubic polynomial | Nonic polynomial |

The phases of the M elements included in the second sequence and the sequence including the positions of the reference signal resources (or the sequence including the M indexes) each satisfy a relationship of a polynomial of a degree D (D≥2) rather than a linear polynomial relationship. Therefore, it can be avoided that a time domain signal of the reference signal of corresponding to the second sequence mapped to the positions of the reference signal resources does not have a peak, that is, has a lower PAPR.

S403: The terminal device sends the reference signal based on the reference signal resources and the second sequence.

The terminal device determines the second sequence, and may map the second sequence to the reference signal resources, to send the reference signal to the network device. The elements included in the second sequence are in one-to-one correspondence with the positions of the reference signal resources indicated by the M indexes. 0s are mapped to non-reference signal resources.

In an implementation, the elements included in the second sequence *S(n)* are sequentially mapped, in one-to-one correspondence, to the positions of the reference signal resources indicated by the M indexes, and 0s are mapped to the non-reference signal resources. The M elements included in the second sequence *S(n)* are in one-to-one correspondence with M cyclic shift codes included in a second cyclic shift code sequence *CS_{RS}*(*n*)*.* For example, an i^{th} element in *S(n)* may be directly mapped to an i^{th} resource in the M indexes sequentially, where i is a positive integer. In this case, sorting does not need to be separately performed on the second sequence *S(n)* and the M indexes.

That the M elements included in the second sequence *S(n)* are in one-to-one correspondence with the M indexes may also be understood as that the M elements included in the second sequence *S(n)* are in one-to-one correspondence with M elements included in *P(n).* It may be understood that the M indexes represented by *P(n)* may be M relative indexes or may be M absolute indexes. Based on the M indexes being the M relative indexes (that is, the indexes of the relative positions of the reference signal resources) or the M absolute indexes (that is, the indexes of the absolute positions of the reference signal resources), the second sequence *S(n)* and *P(n)* satisfy different relationships. Cases are separately described below.

Case A: The M indexes represent the M relative indexes, and the second sequence *S(n)* and the third sequence *P(n)* satisfy Formula (1): $A \left({p}_{0}+c\times P\left(n\right)\right) = \left\{\begin{matrix}scalingfactor \left(n\right) \times S \left(n\right) & 0 \leq n \leq {N}_{S} - 1 \\ 0 & otherwise\end{matrix}, where c=\left\{\begin{matrix}1 & {p}_{0} \leq {p}_{start} \\ - 1 & {p}_{0} \geq {p}_{end}\end{matrix}\right.\right.$ (1)

*p*₀ is the reference index, and represents the index of the absolute position of the reference resource. *p*₀≤*pₛₜₐᵣₜ*, or Po ≥ *p_{end}. pₛₜₐᵣₜ* is a starting position absolute index of the reference signal resources, and *p_{end}* is an ending position absolute index of the reference signal resources. *P*(*n*) represents the M relative indexes, and *p*₀ + *c×P*(*n*) represents absolute indexes corresponding to the M relative indexes. *scaling factor*(*n*) is an amplitude-phase scaling factor sequence, and includes one or more of the following: an amplitude scaling factor *amp*(*n*), a cyclic shift factor *cs*(*n*)*,* or a code division multiplexing factor *cdm*(*n*)*.*

Case B: The M indexes represent the M absolute indexes, and the second sequence *S(n)* and the third sequence *P(n)* satisfy: $A \left(P\left(n\right)\right) = \left\{\begin{matrix}scalingfactor \left(n\right) \times S \left(n\right) & 0 \leq n \leq {N}_{S} - 1 \\ 0 & otherwise\end{matrix}\right.$ (2)

It may be understood that the M elements included in the second sequence *S(n)* are in one-to-one correspondence with the M indexes, that is, one element corresponds to one index. For example, a k^{th} element in the second sequence *S(n)* is mapped to a reference signal resource corresponding to an r^{th} element in the M indexes. k is an integer greater than or equal to 0, and r is an integer greater than or equal to 0. The M indexes may be represented by using the third sequence *P(n).* That the M elements included in the second sequence *S(n)* are in one-to-one correspondence with the M indexes may also be understood as that the M elements included in the second sequence *S(n)* are in one-to-one correspondence with the M elements included in the third sequence *P(n),* that is, one element in the second sequence *S(n)* corresponds to one element in the third sequence *P(n).* The k^{th} element in the reference signal sequence *S(n)* is mapped to a reference signal resource corresponding to an r^{th} element in the third sequence *P(n).*

In an implementation, sorting may be performed on the second sequence *S(n)* and the third sequence *P(n).* The M elements in the second sequence *S(n)* are sorted and the M indexes are sorted, and the sorted M elements in *S(n)* are sequentially mapped to the sorted M indexes. For example, the k^{th} element in the second sequence after the sorting is mapped to the r^{th} element in the sorted M indexes in *P*(*n*)*.* Values of k and r are related to a sorting rule of the elements in the second sequence and a sorting rule of the third sequence *P*(*n*)*.* Correspondingly, a mapping rule between the second sequence *S(n)* and the third sequence *P(n)* includes but is not limited to the following several types.

**Mapping rule** A: The sorting rule of the second sequence *S(n)* is consistent with the sorting rule of the third sequence *P(n),* and k=r. The mapping rule A may also be understood as follows: Sorting is separately performed on *S(n)* and *P(n)* according to same rules, and one-to-one sequential mapping is performed from *S(n)* after the sorting to *P*(*n*)after the sorting. The mapping rule A may also be understood as any one of the following mapping rules A1 to A4. In the mapping rule A1 and the mapping rule A2, sorting is performed on *P(n)* based on values of n, and sorting is performed on *S(n)* based on the values of n. In the mapping rule A3 and the mapping rule A4, sorting is performed on *P(n)* based on values of *P(n),* and sorting is performed on *S(n)* based on the values of n. In the following descriptions of the mapping rules A1 to A4, that M=6 is used as an example.

**Mapping rule A1:** When sorting is separately performed on *S(n)* and *P(n)* in ascending order of n, k=r. For example, sorting is separately performed on *S(n)* and *P(n)* in ascending order of n, to obtain {*S*(0), *S*(1), *S*(2), *S*(3), *S*(4), *S*(5)} and {*P*(0)*, P*(1), *P*(2), *P*(3), *P*(4), *P*(5)}*.* When k and r are numbered from 0, assuming that k=2, S(2) in *S(n)* after the sorting is mapped to a reference signal resource corresponding to *P(2)* in *P*(*n*) after the sorting, that is, r=2=k.

**Mapping rule A2:** When sorting is separately performed on *S(n)* and *P*(*n*) in descending order of n, k=r. For example, sorting is separately performed on *S*(*n*) and *P*(*n*) in descending order of n, to obtain *{S(5),S(4),S(3),S(2),S(1),S(0)}* and {*P*(5), *P*(4), *P*(3), *P*(2), *P*(1), *P*(0)}*.* When k and r are numbered from 0, assuming that k=2, *S(3)* in *S(n)* after the sorting is mapped to a reference signal resource corresponding to P(3) in *P(n)* after the sorting, that is, r=2=k.

The mapping rule A1 may also be understood as the **mapping rule A3:** When sorting is performed on *S(n)* in ascending order of n, and sorting is performed on *P(n)* in ascending order, k=r. The example in FIG. 6A and FIG. 6B is still used. *P*(*n*)*=*{1, 3, 6, 11, 14, 16}, where 0 ≤ n ≤ 5. Sorting is performed on *P*(*n*) in ascending order, to obtain {1, 3, 6, 11, 14, 16}. Sorting is performed on *S(n)* in ascending order of n, to obtain {*S*(0), *S*(1), *S*(2), *S*(3), *S*(4), *S*(5)}*.* When k and r are numbered from 0, assuming that k=2, S(2) in *S(n)* after the sorting is mapped to a reference signal resource whose index is 6 in *P(n)* after the sorting, that is, mapped to a reference signal resource corresponding to a 2^{nd} index in *P(n)* after the sorting. That is, r=2=k.

The mapping rule A2 may also be understood as the **mapping rule A4:** When sorting is performed on *S(n)* in descending order of n, and sorting is also performed on *P(n)* in descending order, k=r. The example in FIG. 6A and FIG. 6B is still used. *P*(*n*)={1, 3, 6, 11, 14, 16}, where 0 ≤ n ≤ 5. Sorting is performed on *P*(*n*) in descending order, to obtain {16, 14, 11, 6, 3, 1}. Sorting is performed on *S(n)* in descending order of n, to obtain {*S*(5), *S*(4), *S*(3), *S*(2), *S*(1), *S*(0)}*.* When k and r are numbered from 0, assuming that k=2, *S(3)* in *S(n)* after the sorting is mapped to a reference signal resource whose index is 11 in *P(n)* after the sorting, that is, mapped to a reference signal resource corresponding to a 2^{nd} index. That is, r=2=k.

It should be noted that, in the mapping rule A, an example in which indexes are numbered from 0 is used. A start number of the indexes is not limited in embodiments of this application. For example, the start number of the indexes may alternatively be 1.

**Mapping rule B:** The sorting rule of the second sequence *S(n)* is the same as the sorting rule of the third sequence *P(n),* and k+r=M-1, or k+r=M+1. Alternatively, the **mapping rule B** may be: The sorting rule of the second sequence *S(n)* is opposite to the sorting rule of the third sequence *P(n),* and k=r. The mapping rule B may also be understood as any one of the following mapping rules B1 to B8. In the mapping rule B1, the mapping rule B3, the mapping rule B5, and the mapping rule B7, sorting is performed on *P(n)* based on values of n, and sorting is performed on *S(n)* based on the values of n. In the mapping rule B2, the mapping rule B4, the mapping rule B6, and the mapping rule B8, sorting is performed on *P(n)* based on values of *P(n),* and sorting is performed on *S(n)* based on the values of n. In the following descriptions of the mapping rules B1 to B8, that M=6 is used as an example.

**Mapping rule B1:** When sorting is performed on *S(n)* in ascending order of n, and sorting is performed on *P(n)* in descending order of n, k=r. For example, sorting is performed on *S(n)* and *CS_{RS}*(*n*) in ascending order of n, to obtain {*S*(0), S(1), S(2), S(3), *S*(4)*, S*(5)}, and sorting is performed on *P*(*n*) in descending order of n, to obtain {*P*(5)*, P*(4)*, P*(3), *P*(2), *P*(1), *P*(0)}. When k and r are numbered from 0, assuming that k=2, S(2) in *S(n)* after the sorting is mapped to a reference signal resource corresponding to *P*(3) in *P(n)* after the sorting, that is, r=2=k. When k and r are numbered from 1, assuming that k=2, S(1) in *S(n)* after the sorting is mapped to a reference signal resource corresponding to *P*(4) in *P(n)* after the sorting, that is, x=2=k.

The mapping rule B1 may also be understood as the **mapping rule B2:** When sorting is performed on *S(n)* in ascending order of n, sorting is performed on *CS_{RS}*(*n*) in ascending order of n, and sorting is performed on *P(n)* in descending order, k=r, and k=x. The example in FIG. 6A and FIG. 6B is still used. *P*(*n*)={1, 3, 6, 11, 14, 16}, where 0 ≤ n ≤ 5. Sorting is performed on *P(n)* (namely, the M indexes) in descending order, to obtain {16, 14, 11, 6, 3, 1}; values of corresponding n are sorted as {5, 4, 3, 2, 1, 0}; and sorting is performed on *S(n)* in ascending order of n, to obtain {*S*(0), *S*(1), *S*(2), *S*(3), *S*(4)*, S*(5)}. When k and r are numbered from 0, assuming that k=2, S(2) in *S(n)* after the sorting is mapped to a reference signal resource corresponding to an index 11 that is in *P*(*n*) after the sorting, that is, mapped to a reference signal resource corresponding to a 2^{nd} index. That is, r=2=k. When k and r are numbered from 1, assuming that k=2, S(1) in *S(n)* after the sorting is mapped to a reference signal resource corresponding to an index 14 that is in ***P*(*n*)** after the sorting, that is, r=2=k.

**Mapping rule B3:** When sorting is performed on *S(n)* in descending order of n, and sorting is performed on *P(n)* in ascending order of n, k=r. For example, sorting is performed on *S(n)* in descending order of n, to obtain {*S*(5), *S*(4), *S*(3), *S*(2), *S*(1), *S*(0)}, and sorting is performed on *P(n)* in ascending order of n, to obtain {*P*(0), *P*(1), *P*(2), *P*(3), *P*(4), *P*(5)}*.* When k, r, and x are numbered from 0, assuming that k=2, S(3) in *S(n)* after the sorting is mapped to a reference signal resource corresponding to *P(2)* in *P(n)* after the sorting, that is, r=2=k. When k and r are numbered from 1, assuming that k=2, S(4) in *S(n)* after the sorting is mapped to a reference signal resource corresponding to *P*(1) in *P(n)* after the sorting, that is, r=2=k.

The mapping rule B3 may also be understood as the **mapping rule B4:** When sorting is performed on *S(n)* in descending order of n, and sorting is performed on *P(n)* in ascending order, k=r. The example in FIG. 6A and FIG. 6B is still used. *P*(*n*)*=*{1, 3, 6, 11, 14, 16}, where 0 ≤ n ≤ 5. Sorting is performed on *P*(*n*) in ascending order, to obtain {1, 3, 6, 11, 14, 16}; values of corresponding n are sorted as {0, 1, 2, 3, 4, 5}; and sorting is performed on *S(n)* in descending order of n, to obtain {*S*(5), *S*(4), *S*(3), *S*(2), *S*(1), *S*(0)}. When k and r are numbered from 0, assuming that k=2, S(3) in *S(n)* after the sorting is mapped to a reference signal resource corresponding to an index 6 that is in *P(n)* after the sorting, that is, r=2=k. When k and r are numbered from 1, assuming that k=2, S(4) in *S(n)* after the sorting is mapped to a reference signal resource corresponding to an index 3 that is in *P(n)* after the sorting, that is, r=2=k.

**Mapping rule B5:** When sorting is performed on *S(n)* in ascending order of n, and sorting is performed on *P(n)* in ascending order of n, k+r=M-1, or k+r=M+1. Sorting is separately performed on *S(n)* and *P(n)* in ascending order of n, to obtain {*S*(0), *S*(1), *S*(2), *S*(3), *S*(4), *S*(5)} and {*P*(0), *P*(1), *P*(2), *P*(3), *P*(4), *P*(5)}. When k and r are numbered from 0, S(2) in *S*(*n*) after the sorting may be mapped to a reference signal resource corresponding to *P*(3) in *P(n)* after the sorting. That is, k=2, r=3, and k+r=5=6 (namely, M)-1. When k and r are numbered from 1, S(1) in *S*(*n*) after the sorting may be mapped to a reference signal resource corresponding to *P*(4) in *P(n)* after the sorting. That is, k=2, r=5, and k+r=7=6 (namely, M)+1.

The mapping rule B5 may also be understood as the **mapping rule B6:** When sorting is performed on *S(n)* in ascending order of n, and sorting is performed on *P(n)* in ascending order, k+r=M-1, or k+r=M+1. The example in FIG. 6A and FIG. 6B is still used. *P*(*n*)={1, 3, 6, 11, 14, 16}. Sorting is performed on *P*(*n*) in descending order, to obtain {1, 3, 6, 11, 14, 16}; values of corresponding n are sorted as {0, 1, 2, 3, 4, 5}; and sorting is performed on *S(n)* in ascending order of n, to obtain {*S*(0), *S*(1), *S*(2), *S*(3), *S*(4)*, S*(5)}. When k and r are numbered from 0, S(2) in *S(n)* after the sorting is mapped to a reference signal resource corresponding to an index 11 that is in *P(n)* after the sorting, that is, mapped to a reference signal resource corresponding to a 3^{rd} index. That is, k=2, r=3, and k+r=5=6 (namely, M)-1. When k and r are numbered from 1, S(1) in *S(n)* after the sorting is mapped to a reference signal resource corresponding to an index 14 that is in *P*(*n*) after the sorting. That is, k=2, r=5, and k+r=7=6 (namely, M)+1.

**Mapping rule B7:** When sorting is performed on *S(n)* in descending order of n, and sorting is performed on *P(n)* in descending order of n, k+r=M-1, or k+r=M+1. Sorting is separately performed on *S(n)* and *P(n)* in descending order of n, to obtain {*S*(5), *S*(4), *S*(3), *S*(2), *S*(1), *S*(0)} and *{P(5), P*(4), *P*(3), *P*(2), *P*(1), *P*(0)}*.* When k and r are numbered from 0, S(3) in *S(n)* after the sorting is mapped to a reference signal resource corresponding to *P(2)* in *P(n)* after the sorting. That is, k=2, r=3, and k+r=5=6 (namely, M)-1. When k and r are numbered from 1, S(4) in *S(n)* after the sorting is mapped to a reference signal resource corresponding to *P*(1) in *P(n)* after the sorting. That is, k=2, r=5, and k+r=7=6 (namely, M)+1.

The mapping rule B7 may also be understood as the **mapping rule B8:** When sorting is performed on *S(n)* in descending order of n, and sorting is performed on *P(n)* in descending order, k+r=M-1, or k+r=M+1. The example in FIG. 6A and FIG. 6B is still used. *P(n)* ={1, 3, 6, 11, 14, 16}. {16, 14, 11, 6, 3, 1}; values of corresponding n are sorted as {5,4, 3, 2, 1, 0}; and sorting is performed on *S(n)* in descending order of n, to obtain {*S*(5), *S*(4), *S*(3), *S*(2), *S*(1), *S*(0)}. When k and r are numbered from 0, S(3) in *S(n)* after the sorting is mapped to a reference signal resource corresponding to an index 6 that is in *P(n)* after the sorting, that is, mapped to a reference signal resource corresponding to a 3^{rd} index. That is, k=2, r=3, and k+r=5=6 (namely, M)-1. When k and r are numbered from 1, S(4) in *S(n)* after the sorting is mapped to a reference signal resource corresponding to an index 3 that is in ***P*(*n*)** after the sorting. That is, k=2, r=5, and k+r=7=6 (namely, M)+1.

In embodiments of this application, sorting may be separately performed on the second sequence *S(n)* and the third sequence *P*(*n*) in ascending or descending order. The sorting rule corresponding to the second sequence *S(n)* may be the same as or different from the sorting rule corresponding to the third sequence *P(n).* For example, both the second sequence *S(n)* and the third sequence *P*(*n*) correspond to an ascending sorting rule or a descending sorting rule. Alternatively, sorting is performed on one of the second sequence *S(n)* and the third sequence *P(n)* according to the ascending sorting rule, and sorting is performed on the other one of the second sequence and the third sequence according to the descending sorting rule. For ease of description, in this embodiment of this application, the ascending sorting rule is referred to as a sorting rule A, and the descending sorting rule is referred to as a sorting rule B. Assuming that the sorting rule A satisfies: *h*(*n*) = *n,* where 0 ≤ *n* ≤ *N_{H} -* 1, the sorting rule B satisfies: *h*(*n*) *= N_{H}* - 1 - *n*, where 0 ≤ *n* ≤ *N_{H} -* 1*.*

For example, sorting is performed on the second sequence *S(n),* to obtain a sequence ${S \left(n\right)}^{˜}$*.* ${S \left(n\right)}^{˜}$ satisfies: ${S \left(n\right)}^{˜} = S \left(h\left(n\right)\right)$, where *0≤n≤N_{S}-1, N_{H} = N_{S}*, *and N_{S}* is a length of *S(n)* or is a quantity of elements included in *S(n).* If sorting is performed on the second sequence *S(n)* according to the sorting rule A, ${S \left(n\right)}^{˜} = S \left(n\right)$*.* If sorting is performed on the second sequence *S(n)* according to the sorting rule B, ${S \left(n\right)}^{˜} = S \left({N}_{S}-1-n\right)$. Sorting is performed on the third sequence *P(n),* to obtain ${P \left(n\right)}^{˜}$*.* ${P \left(n\right)}^{˜}$ satisfies: ${P \left(n\right)}^{˜} = P \left(h\left(n\right)\right)$, where *0≤n≤N_{P}-1*, and *N_{H} = N_{P}.* If sorting is performed on the third sequence *P*(*n*) according to the sorting rule A, ${P \left(n\right)}^{˜} = P \left(n\right)$*.* If sorting is performed on the third sequence *P(n)* according to the sorting rule B, ${P \left(n\right)}^{˜} = P \left({N}_{P}-1-n\right)$, where *N_{P} = N_{S}.*

After ${S \left(n\right)}^{˜}$ and ${P \left(n\right)}^{˜}$ are obtained, scaling processing (including a cyclic shift) using amplitude-phase scaling factors may be performed on ${S \left(n\right)}^{˜}$, and processed ${S \left(n\right)}^{˜}$ is mapped to reference signal resources corresponding to ${p}_{0} + c \times {P \left(n\right)}^{˜}$ or ${P \left(n\right)}^{˜}$*.* A sequence mapped to the non-reference signal resources is an all-0 sequence. Sorting is performed on an amplitude-phase scaling factor sequence *scaling factor(n)* according to a sorting rule, to obtain ${scalingfactor \left(n\right)}^{˜}$*.* ${scalingfactor \left(n\right)}^{˜}$ satisfies: ${scalingfactor \left(n\right)}^{˜} = scaliingfactor \left(h\left(n\right)\right)$, where *0≤n≤N_{sf}-1*, *N_{H} = N_{sf}*, and *N_{sf}* is a length of *scaling factor(n).* If sorting is performed according to the sorting rule A, ${scalingfactor \left(n\right)}^{˜} = scaliingfactor \left(n\right)$*.* If sorting is performed according to the sorting rule B, ${scaliingfactor \left(n\right)}^{˜} = scaliingfactor \left({N}_{sf}-1-n\right)$. In this way, one-to-one sequential mapping/correspondence is performed from the sorted M indexes to the sorted elements in the second sequence.

Based on the M indexes being the relative indexes or the absolute indexes, ${S \left(n\right)}^{˜}$ and ${P \left(n\right)}^{˜}$ satisfy different relationships. Corresponding to Case A, when the M indexes are the relative indexes, the second sequence ${S \left(n\right)}^{˜}$ after the sorting and the third sequence ${P \left(n\right)}^{˜}$ after the sorting satisfy Formula (3): $A \left({p}_{0}+c\times {P \left(n\right)}^{˜}\right) = \left\{\begin{matrix}{scalingfactor}^{˜} \left(n\right) \times {S \left(n\right)}^{˜} & 0 \leq n \leq {N}_{S} - 1 \\ 0 & otherwise\end{matrix}\right. , where c = \left\{\begin{matrix}1 & {p}_{0} \leq {p}_{start} \\ - 1 & {p}_{0} \geq {p}_{end}\end{matrix}\right.$ (3)

*p*₀ is the reference index, and represents the index of the absolute position of the reference resource. *p*₀≤*pₛₜₐᵣₜ*, or *p*₀ ≥ *p_{end}. pₛₜₐᵣₜ* is the starting position absolute index of the reference signal resources, and *p_{end}* is the ending position absolute index of the reference signal resources. ${P \left(n\right)}^{˜}$ represents sorted M relative indexes, and ${p}_{0} + c \times {P \left(n\right)}^{˜}$ represents absolute indexes corresponding to the M relative indexes. ${scalingfactor \left(n\right)}^{˜}$ is the amplitude-phase scaling factor sequence after the sorting, and includes one or more of the following: an amplitude scaling factor *amp*(*n*), a cyclic shift factor *cs*(*n*)*,* or a code division multiplexing factor *cdm*(*n*)*.* ${S \left(n\right)}^{˜}$ is the second sequence after the sorting. A(n) or ${S \left(n\right)}^{˜}$ may be at a port level, and a mapping rule of each port includes the mapping rule A or the mapping rule B. ${S \left(n\right)}^{˜}$ may alternatively be at a port group level, and a mapping rule of each port group includes the mapping rule A or the mapping rule B.

Corresponding to Case B, when the M indexes are the M absolute indexes, the second sequence ${S \left(n\right)}^{˜}$ after the sorting and the third sequence ${P \left(n\right)}^{˜}$ after the sorting satisfy Formula (4): $A \left({P \left(n\right)}^{˜}\right) = \left\{\begin{matrix}{scalingfactor \left(n\right)}^{˜} \times {S \left(n\right)}^{˜} & 0 \leq n \leq {N}_{S} - 1 \\ 0 & otherwise\end{matrix}\right.$ (4) ${P \left(n\right)}^{˜}$ represents sorted M absolute indexes. ${scalingfactor \left(n\right)}^{˜}$ is the amplitude-phase scaling factor sequence after the sorting, and includes one or more of the following: an amplitude scaling factor *amp*(*n*), a cyclic shift factor *cs*(*n*)*,* or a code division multiplexing factor *cdm*(*n*)*.* ${S \left(n\right)}^{˜}$ is the second sequence after the sorting. A(n) or ${S \left(n\right)}^{˜}$ may be at a port level, and a mapping rule of each port includes the mapping rule A or the mapping rule B. ${S \left(n\right)}^{˜}$ may alternatively be at a port group level, and a mapping rule of each port group includes the mapping rule A or the mapping rule B.

It may be understood that, relatively, Formula (1) is a mapping relationship satisfied by the second sequence *S(n)* and the third sequence *P(n)* before the sorting, and Formula (3) and Formula (4) are mapping relationships satisfied by the second sequence *S(n)* and the third sequence *P(n)* after the sorting.

In this way, it can be learned that the second sequence ${S \left(n\right)}^{˜}$ after the sorting and the third sequence ${P \left(n\right)}^{˜}$ after the sorting satisfy: $A \left({p}_{0}+c\times {P \left(n\right)}^{˜}\right) = \left\{\begin{matrix}{scalingfactor}^{˜} \left(n\right) \times {S \left(n\right)}^{˜} & 0 \leq n \leq {N}_{S} - 1 \\ 0 & otherwise\end{matrix}, where c=\left\{\begin{matrix}1 & {p}_{0} \leq {p}_{start} \\ - 1 & {p}_{0} \geq {p}_{end}\end{matrix}\right.\right.$

Based on different reference indexes *p*₀, different sorting rules of the second sequence *S(n),* and different sorting rules of the third sequence *P(n),* $A \left({p}_{0}+c\times {P \left(n\right)}^{˜}\right)$ is also different. The following uses a plurality of examples for description. The following embodiments are described by using an example in which P(n) represents relative position indexes. ${P \left(n\right)}^{˜}$ is obtained by performing sorting on P(n) according to the sorting rule A or the sorting rule B, and ${p}_{0} + c \times {P \left(n\right)}^{˜}$ represents corresponding absolute position indexes. The following uses a plurality of examples for description.

**Example 1:** *p*₀ is equal to *pₛₜₐᵣₜ*; ${S \left(n\right)}^{˜}$ is obtained by performing sorting on *S(n)* according to the sorting rule A, that is, ${S \left(n\right)}^{˜} = S \left(n\right) ; {P \left(n\right)}^{˜}$ is obtained by performing sorting on *P(n)* according to the sorting rule A, that is, ${P \left(n\right)}^{˜} = P \left(n\right)$; and ${scalingfactor \left(n\right)}^{˜}$ is obtained by performing sorting on *scaliingfactor(n)* according to the sorting rule A, that is, ${scalingfactor \left(n\right)}^{˜} = scaliingfactor \left(n\right)$*. c* = 1, Nₛ = N_{sf} = N_{P}, and ${S \left(n\right)}^{˜}$ and ${p}_{0} + c \times {P \left(n\right)}^{˜}$ satisfy a relationship shown in Table 4.

**Table 4**

| *n* | ${p}_{0} + c \times {P \left(n\right)}^{˜}$ | ${P \left(n\right)}^{˜}$ | ${S \left(n\right)}^{˜}$ |
|---|---|---|---|
| 0 | *pₛₜₐᵣₜ + P*(0) | *P*(0) | *S*(0) |
| 1 | *pₛₜₐᵣₜ + P*(1) | *P*(1) | *S*(1) |
| 2 | *pₛₜₐᵣₜ* + *P*(2) | *P*(2) | *S*(2) |
| 3 | *pₛₜₐᵣₜ + P*(3) | *P*(3) | *S*(3) |
| 4 | *pₛₜₐᵣₜ + P*(4) | *P*(4) | *S*(4) |
| ... | ... | | ... |
| *N_{S} -* 1 | *pₛₜₐᵣₜ + P*(*N_{S} -* 1) | *P*(*N_{S}* - 1) | *S*(*N_{S} -* 1) |

Example 2: *p*₀ is equal to *pₛₜₐᵣₜ*; ${S \left(n\right)}^{˜}$ is obtained by performing sorting on *S(n)* according to the sorting rule B, that is, ${S \left(n\right)}^{˜} = S \left({N}_{S}-1-n\right) ; {P \left(n\right)}^{˜}$ is obtained by performing sorting on *P(n)* according to the sorting rule B, that is, ${P \left(n\right)}^{˜} = P \left({N}_{P}-1-n\right)$; and ${scalingfactor \left(n\right)}^{˜}$ is obtained by performing sorting on *scaliingfactor(n)* according to the sorting rule B, that is, ${scalingfactor \left(n\right)}^{˜} = scaliingfactor \left({N}_{sf}-1-n\right)$ *. c =* 1, Nₛ = N_{sf} = N_{P}, and ${S \left(n\right)}^{˜}$ and ${p}_{0} + c \times {P \left(n\right)}^{˜}$ satisfy a relationship shown in Table 5.

**Table 5**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *pₛₜₐᵣₜ + P*(*N_{S} -* 1) | *P*(*N_{S} -* 1) | *S*(*N_{S} -* 1) |
| 1 | *pₛₜₐᵣₜ + P*(*N_{S} -* 2) | *P*(*N_{S} -* 2) | *S*(*N_{S} -* 2) |
| 2 | *pₛₜₐᵣₜ + P*(*N_{S} -* 3) | *P*(*N_{S}* - 3) | *S*(*N_{S} -* 3) |
| 3 | *pₛₜₐᵣₜ + P*(*N_{S} -* 4) | *P*(*N_{S} -* 4) | *S*(*N_{S} -* 4) |
| 4 | *pₛₜₐᵣₜ + P*(*N_{S} -* 5) | *P*(*N_{S} -* 5) | *S*(*N_{S} -* 5) |
| ... | ... | ... | ... |
| *N_{S} -* 1 | *pₛₜₐᵣₜ + P*(0) | *P*(0) | *S*(0) |

Example 3: *p*₀*=pₛₜₐᵣₜ*; ${S \left(n\right)}^{˜}$ is obtained by performing sorting on *S(n)* according to the sorting rule A, that is, ${S \left(n\right)}^{˜} = S \left(n\right) ; {P \left(n\right)}^{˜}$ is obtained by performing sorting on *P(n)* according to the sorting rule B, that is, ${P \left(n\right)}^{˜} = P \left({N}_{P}-1-n\right)$; and ${scalingfactor \left(n\right)}^{˜}$ is obtained by performing sorting on *scaliingfactor(n)* according to the sorting rule A, that is, ${scalingfactor \left(n\right)}^{˜} = scaliingfactor \left(n\right)$*. c* = 1, Nₛ = N_{sf} = N_{P}, and ${S \left(n\right)}^{˜}$ and ${p}_{0} + c \times {P \left(n\right)}^{˜}$ satisfy a relationship shown in Table 6.

**Table 6**

| *n* | ${p}_{0} + c \times {P \left(n\right)}^{˜}$ | ${P \left(n\right)}^{˜}$ | ${S \left(n\right)}^{˜}$ |
|---|---|---|---|
| 0 | *pₛₜₐᵣₜ + P*(*N_{S} -* 1) | *P*(*N_{S} -* 1) | *S*(0) |
| 1 | *pₛₜₐᵣₜ + P*(*N_{S} -* 2) | *P*(*N_{S} -* 2) | *S*(1) |
| 2 | *pₛₜₐᵣₜ + P*(*N_{S} -* 3) | *P*(*N_{S} -* 3) | *S*(2) |
| 3 | *pₛₜₐᵣₜ + P*(*N_{S} -* 4) | *P*(*N_{S} -* 4) | *S*(3) |
| 4 | *pₛₜₐᵣₜ + P*(*N_{S} -* 5) | P(*N*_{S} - 5) | *S*(4) |
| ... | ... | ... | ... |
| *N_{S} -* 1 | *pₛₜₐᵣₜ + P*(0) | *P*(0) | *S*(0) |

Example **4:** *p*₀*=pₛₜₐᵣₜ*; ${S \left(n\right)}^{˜}$ is obtained by performing sorting on *S(n)* according to the sorting rule B, that is, ${S \left(n\right)}^{˜} = S \left({N}_{S}-1-n\right) ; {P \left(n\right)}^{˜}$ is obtained by performing sorting on *P(n)* according to the sorting rule A, that is, ${P \left(n\right)}^{˜} = P \left(n\right)$; and ${scalingfactor \left(n\right)}^{˜}$ is obtained by performing sorting on *scaliingfactor(n)* according to the sorting rule B, that is, ${scalingfactor \left(n\right)}^{˜} = scaliingfactor \left({N}_{sf}-1-n\right)$*. c* = 1, Nₛ = N_{sf} = N_{P}, and ${S \left(n\right)}^{˜}$ and ${p}_{0} + c \times {P \left(n\right)}^{˜}$ satisfy a relationship shown in Table 7.

**Table 7**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *pₛₜₐᵣₜ + P*(0) | *P*(0) | *S*(*N_{S} -* 1) |
| 1 | *pₛₜₐᵣₜ + P*(1) | *P*(1) | *S*(*N_{S} -* 2) |
| 2 | *pₛₜₐᵣₜ + P*(2) | *P(2)* | *S*(*N_{S} -* 3) |
| 3 | *pₛₜₐᵣₜ + P*(3) | *P(3)* | *S*(*N_{S} -* 4) |
| 4 | *pₛₜₐᵣₜ + P*(4) | *P*(4) | *S*(*N_{S} -* 5) |
| ... | ... | | ... |
| *N_{S} -* 1 | *pₛₜₐᵣₜ + P*(*N_{S} -* 1) | *P*(*N_{S}* - 1) | *S*(0) |

Example 5: *p*₀*=p_{end}*; ${S \left(n\right)}^{˜}$ is obtained by performing sorting on *S(n)* according to the sorting rule A, that is, ${S \left(n\right)}^{˜} = S \left(n\right) ; {P \left(n\right)}^{˜}$ is obtained by performing sorting on *P(n)* according to the sorting rule A, that is, ${P \left(n\right)}^{˜} = P \left(n\right)$; and ${scalingfactor \left(n\right)}^{˜}$ is obtained by performing sorting on *scaliingfactor(n)* according to the sorting rule A, that is, ${scalingfactor \left(n\right)}^{˜} = scaliingfactor \left(n\right)$*.* Nₛ = N_{sf} = N_{P}, *c* = -1, and ${S \left(n\right)}^{˜}$ and ${p}_{0} + c \times {P \left(n\right)}^{˜}$ satisfy a relationship shown in Table 8.

**Table 8**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *p_{end} - P*(0) | *P*(0) | *S*(0) |
| 1 | *p_{end} - P*(1) | *P*(1) | *S*(1) |
| 2 | *p_{end} - P*(2) | *P*(2) | *S*(2) |
| 3 | *p_{end} - P*(3) | *P*(3) | *S*(3) |
| 4 | *p_{end} - P*(4) | *P*(4) | *S*(4) |
| ... | ... | ... | ... |
| *N_{S} -* 1 | *p_{end} - P*(*N_{S} -* 1) | *P*(*N_{S} -* 1) | *S*(*N_{S} -* 1) |

Example 6: *p*₀*=p_{end}*; ${S \left(n\right)}^{˜}$ is obtained by performing sorting on *S(n)* according to the sorting rule B, that is, ${S \left(n\right)}^{˜} = S \left({N}_{S}-1-n\right) ; {P \left(n\right)}^{˜}$ is obtained by performing sorting on *P(n)* according to the sorting rule B, that is, ${P \left(n\right)}^{˜} = P \left({N}_{P}-1-n\right)$; and ${scalingfactor \left(n\right)}^{˜}$ is obtained by performing sorting on *scaliingfactor(n)* according to the sorting rule B, that is, ${scalingfactor \left(n\right)}^{˜} = scaliingfactor \left({N}_{sf}-1-n\right)$*. c =* -1, Nₛ = N_{sf} = N_{P}, and ${S \left(n\right)}^{˜}$ and ${p}_{0} + c \times {P \left(n\right)}^{˜}$ satisfy a relationship shown in Table 9.

**Table 9**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *p_{end} - P*(*N_{S} -* 1) | *P*(*N_{S}* - 1) | *S*(*N_{S} -* 1) |
| 1 | *p_{end} - P*(*N_{S} -* 2) | (*N_{S}* - 2) | *S*(*N_{S} -* 2) |
| 2 | *p_{end} - P*(*N_{S} -* 3) | *P*(*N_{S}* - 3) | *S*(*N_{S} -* 3) |
| 3 | *p_{end} - P*(*N_{S} -* 4) | *P*(*N_{S} -* 4) | *S*(*N_{S} -* 5) |
| 4 | *p_{end} - P*(*N_{S} -* 5) | *P*(*N_{S} -* 5) | *S*(*N_{S} -* 6) |
| ... | ... | ... | ... |
| *N_{S} -* 1 | *p_{end} - P*(0) | *P*(0) | *S*(0) |

**Example 7:** *p*₀*=p_{end}*; ${S \left(n\right)}^{˜}$ is obtained by performing sorting on *S(n)* according to the sorting rule A, that is, ${S \left(n\right)}^{˜} = S \left(n\right) ; {P \left(n\right)}^{˜}$ is obtained by performing sorting on *P(n)* according to the sorting rule B, that is, ${P \left(n\right)}^{˜} = P \left({N}_{P}-1-n\right)$; and ${scalingfactor \left(n\right)}^{˜}$ is obtained by performing sorting on *scaliingfactor(n)* according to the sorting rule A, that is, ${scalingfactor \left(n\right)}^{˜} = scaliingfactor \left(n\right)$*.* c = -1 , Nₛ = N_{sf} = N_{P}, and ${S \left(n\right)}^{˜}$ and ${p}_{0} + c \times {P \left(n\right)}^{˜}$ satisfy a relationship shown in Table 10.

**Table 10**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *p_{end} - P*(*N_{S} -* 1) | *P*(*N_{S}* - 1) | S(0) |
| 1 | *p_{end} - P*(*N_{S} -* 2) | *P*(*N_{S}* - 2) | S(1) |
| 2 | *p_{end} - P*(*N_{S} -* 3) | *P*(*N_{S}* - 3) | *S*(2) |
| 3 | *p_{end} - P*(*N_{S} -* 4) | *P*(*N_{S} -* 4) | *S*(3) |
| 4 | *p_{end} - P*(*N_{S} -* 5) | *P*(*N_{S}* - 5) | *S*(4) |
| ... | ... | ... | ... |
| *N_{S} -* 1 | *p_{end} - P*(0) | *p_{end} - P*(0) | *S*(*N_{S} -* 1) |

**Example 8:** *p*₀*=p_{end}*; ${S \left(n\right)}^{˜}$ is obtained by performing sorting on *S(n)* according to the sorting rule B, that is, ${S \left(n\right)}^{˜} = S \left({N}_{S}-1-n\right) ; {P \left(n\right)}^{˜}$ is obtained by performing sorting on *P(n)* according to the sorting rule A, that is, ${P \left(n\right)}^{˜} = P \left(n\right)$; and ${scalingfactor \left(n\right)}^{˜}$ is obtained by performing sorting on *scaliingfactor(n)* according to the sorting rule B, that is, $\left.{scalingfactor \left(n\right)}^{˜}=scaliingfactor\left({N}_{sf}-1-n\right)\right)$*. c =* -1 , Nₛ = N_{sf} = N_{P}, and ${S \left(n\right)}^{˜}$ and ${p}_{0} + c \times {P \left(n\right)}^{˜}$ satisfy a relationship shown in Table 11.

**Table 11**

| n | ${p}_{0} + c \times {P \left(n\right)}^{˜}$ | ${P \left(n\right)}^{˜}$ | ${S \left(n\right)}^{˜}$ |
|---|---|---|---|
| 0 | p_{end} - *P*(0) | *P*(0) | *S*(*N_{S} -* 1) |
| 1 | *p_{end} - P*(1) | *P*(1) | *S*(*N_{S} -* 2) |
| 2 | *p_{end} - P*(2) | *P*(2) | *S*(*N_{S} -* 3) |
| 3 | *p_{end} - P*(3) | *P*(3) | *S*(*N_{S} -* 4) |
| 4 | *p_{end} - P*(4) | *P*(4) | *S*(*N_{S} -* 5) |
| ... | ... | ... | ... |
| *N_{S} -* 1 | *p_{end} - P*(*N_{S} -* 1) | *P*(*N_{S} -* 1) | *S*(0) |

The terminal device may map the second sequence *S(n)* to corresponding reference signal resources based on any one of Table 2 to Table 9. It should be noted that Table 2 to Table 9 are merely examples. How the second sequence *S(n)* is mapped to the reference signal resources is not limited in embodiments of this application provided that the reference signal can have the lower PAPR.

In the communication method 400, for the non-uniformly distributed reference signal resources, the network device may configure the positions of the reference signal resources and the first sequence for the terminal device, so that the terminal device determines, based on the positions of the reference signal resources and the first sequence, the reference signal sequence that matches the positions of the reference signal resources. In this way, the reference signal mapped to the reference signal resources has the lower PAPR, thereby reducing reference signal distortion and improving decoding accuracy for the network device.

In the communication method 400, an example in which the terminal device maps the second sequence to the reference signal resources and sends the reference signal to the network device is used. In some embodiments, the network device may send the first information and the second information to the terminal device, map the second sequence to the reference signal resources, and send the reference signal to the terminal device. Correspondingly, the terminal device receives, on the reference signal resources, the reference signal from the network device. For brevity, details are not described herein again.

In the foregoing embodiments provided in this application, the method provided in embodiments of this application is described by using an example in which the network device and the terminal device perform the method. In this application, embodiments may be independently implemented or may be implemented in combination based on some internal relationships. In each embodiment, different implementations may be implemented in combination or independently. To implement the functions in the method provided in embodiments of this application, steps performed by the terminal device may be implemented by different functional entities included in the terminal device, and steps performed by the network device may be implemented by different functional entities included in the network device. For example, the network device may be in a CU-DU architecture, where a CU may generate the first information, and a DU may send the first information. To implement the functions in the method provided in embodiments of this application, the terminal device and the network device may include a hardware structure and/or a software module, and the foregoing functions are implemented in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

Based on a same inventive concept as the method embodiments, an embodiment of this application provides a communication apparatus. The following describes the communication apparatus configured to implement the foregoing method in embodiments of this application with reference to the accompanying drawings. Therefore, all the foregoing content may be used in the following embodiments. Repeated content is not described again.

FIG. 7 is a block diagram of a communication apparatus 700 according to an embodiment of this application. The communication apparatus 700 may be a terminal device or a network device in the foregoing embodiments. For example, the communication apparatus 700 may be the terminal device in FIG. 1, the communication apparatus 700 is a chip (system) in the terminal device, or the communication apparatus 700 is a software module of the terminal device. The communication apparatus 700 may correspondingly implement functions or steps implemented by the terminal device in the foregoing method embodiments. For another example, the communication apparatus 700 may be the network device in FIG. 1, the communication apparatus 700 is a chip (system) in the network device, or the communication apparatus 700 is a software module of the network device. The communication apparatus 700 may correspondingly implement functions or steps implemented by the network device in the foregoing method embodiments. The communication apparatus 700 may include a processing module 710 and a transceiver module 720. Optionally, a storage module may be further included. The storage module may be configured to store instructions (code or a program) and/or data. The storage module may be, for example, a memory. The processing module 710 and the transceiver module 720 may be coupled to the storage module. For example, the processing module 710 may read the instructions (the code or the program) and/or the data in the storage module, to implement the corresponding method. When the communication apparatus 700 is the chip in the terminal device or the network device, the storage module may be a storage module, for example, a register or a cache, inside the chip. For example, the storage module may alternatively be a storage module that is in the network device or the terminal device and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

The processing module 710 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 720 is a transceiver, an interface circuit, a bus, a pin, or another possible communication interface, and is configured to receive a signal from another apparatus. For example, when the apparatus is implemented in a form of a chip, the transceiver module 720 is an interface circuit used by the chip to receive a signal from another chip or apparatus, or is an interface circuit used by the chip to send a signal to another chip or apparatus.

In an implementation, the communication apparatus 700 can correspondingly implement behavior and functions of the terminal device in the foregoing method embodiments. The communication apparatus 700 may be the terminal device, may be a component (for example, a chip or a circuit) used in the terminal device, may be a chip or a chip group in the terminal device or a part that is of the chip and that is configured to perform a related method function, or may be a software module that can implement the method performed by the terminal device in the foregoing method (for example, the communication method 400). This is not limited. For details, refer to the related content in the foregoing method embodiments. Details are not described herein again.

For example, the transceiver module 720 is configured to receive first information and second information, where the first information indicates a first sequence, the second information indicates positions of reference signal resources, and the reference signal resources are non-uniformly distributed in frequency domain; and M is a positive integer, the first sequence and the positions of the reference signal resources are for determining a second sequence, and the second sequence corresponds to a reference signal. The processing module 710 is configured to determine the second sequence based on the first sequence and the positions of the reference signal resources, where the second sequence corresponds to the reference signal.

In an optional implementation, that the second information indicates the positions of the reference signal resources includes: The second information indicates M indexes. The M indexes are indexes of relative positions of the reference signal resources with respect to a reference resource, or the M indexes are indexes of absolute positions of the reference signal resources. M is a positive integer.

In an optional implementation, the first sequence includes N elements, and the second sequence includes M elements in the N elements. Positions of the M elements in the N elements correspond to the M indexes, and N is a positive integer.

In an optional implementation, the first information includes one or more of the following: a first parameter or a first length. The first parameter indicates all or part of coefficients of a polynomial corresponding to a phase of the first sequence. The first length indicates a length of the first sequence.

In an optional implementation, the second information includes information about the M indexes.

In an optional implementation, the information about the M indexes includes one or more of the following: a second parameter, a highest degree of a polynomial corresponding to the M indexes, or the M indexes. The second parameter indicates all or part of coefficients of the polynomial corresponding to the M indexes.

In an optional implementation, the second information further includes a reference index. The reference index is an index of an absolute position of the reference resource.

In an optional implementation, when the M indexes are the indexes of the relative positions of the reference signal resources with respect to the reference resource, and the reference index is less than or equal to an index of a starting absolute position of the reference signal resources, a sum of an i^{th} index in the M indexes and the reference index is an i^{th} absolute index. The i^{th} absolute index is an i^{th} index in the indexes of the absolute positions of the reference signal resources. i is an integer greater than or equal to 0.

In an optional implementation, when the M indexes are the indexes of the relative positions of the reference signal resources with respect to the reference resource, and the reference index is greater than or equal to an index of an ending absolute position of the reference signal resources, a difference between the reference index and an i^{th} index in the M indexes is an i^{th} absolute index. The i^{th} absolute index is an i^{th} index in the indexes of the absolute positions of the reference signal resources. i is an integer greater than or equal to 0.

In an optional implementation, the transceiver module 720 is further configured to send or receive the reference signal based on the reference signal resources.

In an optional implementation, a k^{th} element in the second sequence is mapped to a reference signal resource corresponding to an r^{th} element in the M indexes. k is equal to r, or a sum of k and r is equal to M-1 or M+1. k is an integer greater than or equal to 0, and r is an integer greater than or equal to 0.

In an implementation, the communication apparatus 700 can correspondingly implement behavior and functions of the network device in the foregoing method embodiments. The communication apparatus 700 may be the network device, may be a component (for example, a chip or a circuit) used in the network device, may be a chip or a chip group in the network device or a part that is of the chip and that is configured to perform a related method function, or may be a software module that can implement the method performed by the network device in the foregoing method (for example, the communication method 400). This is not limited. For details, refer to the related content in the foregoing method embodiments. Details are not described herein again.

For example, the transceiver module 720 is configured to send first information and second information, where the first information indicates a first sequence, the second information indicates positions of reference signal resources, and the reference signal resources are non-uniformly distributed in frequency domain; and M is a positive integer, the first sequence and the positions of the reference signal resources are for determining a second sequence, and the second sequence corresponds to a reference signal. The processing module 710 is configured to generate the first information and the second information.

In an optional implementation, that the second information indicates the positions of the reference signal resources includes: The second information indicates M indexes. The M indexes are indexes of relative positions of the reference signal resources with respect to a reference resource, or the M indexes are indexes of absolute positions of the reference signal resources. M is a positive integer.

In an optional implementation, the first sequence includes N elements, and the second sequence includes M elements in the N elements. Positions of the M elements in the N elements correspond to the M indexes, and N is a positive integer.

In an optional implementation, the first information includes one or more of the following: a first parameter or a first length. The first parameter indicates all or part of coefficients of a polynomial corresponding to a phase of the first sequence. The first length indicates a length of the first sequence.

In an optional implementation, the second information includes information about the M indexes.

In an optional implementation, the information about the M indexes includes one or more of the following: a second parameter, a highest degree of a polynomial corresponding to the M indexes, or the M indexes. The second parameter indicates all or part of coefficients of the polynomial corresponding to the M indexes.

In an optional implementation, the second information further includes a reference index. The reference index is an index of an absolute position of the reference resource.

In an optional implementation, when the M indexes are the indexes of the relative positions of the reference signal resources with respect to the reference resource, and the reference index is less than or equal to an index of a starting absolute position of the reference signal resources, a sum of an i^{th} index in the M indexes and the reference index is an i^{th} absolute index. The i^{th} absolute index is an i^{th} index in the indexes of the absolute positions of the reference signal resources. i is an integer greater than or equal to 0.

In an optional implementation, when the M indexes are the indexes of the relative positions of the reference signal resources with respect to the reference resource, and the reference index is greater than or equal to an index of an ending absolute position of the reference signal resources, a difference between the reference index and an i^{th} index in the M indexes is an i^{th} absolute index. The i^{th} absolute index is an i^{th} index in the indexes of the absolute positions of the reference signal resources. i is an integer greater than or equal to 0.

In an optional implementation, the transceiver module 720 is further configured to send or receive the reference signal based on the reference signal resources.

In an optional implementation, a k^{th} element in the second sequence is mapped to a reference signal resource corresponding to an r^{th} element in the M indexes. k is equal to r, or a sum of k and r is equal to M-1 or M+1. k is an integer greater than or equal to 0, and r is an integer greater than or equal to 0.

When the communication apparatus 700 is a chip-type apparatus or circuit, the transceiver module may be an input/output circuit and/or a communication interface, and the processing module is an integrated processor, a microprocessor, or an integrated circuit.

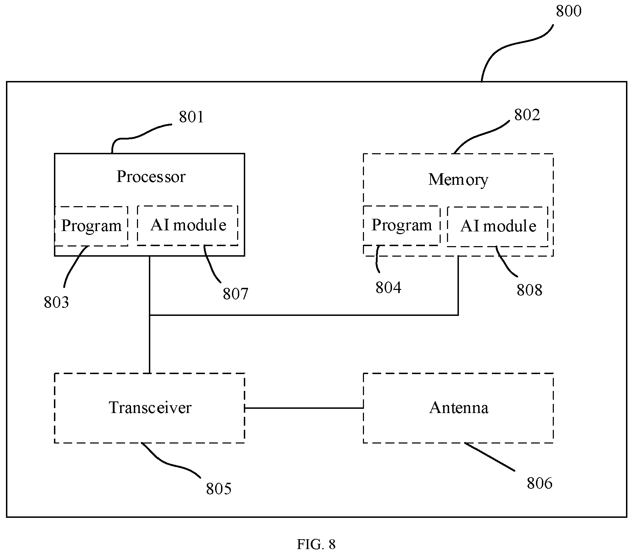

FIG. 8 is a block diagram of a communication apparatus 800 according to an embodiment of this application. The communication apparatus 800 may be a terminal device or a network device in the foregoing embodiments. For example, the communication apparatus 800 may be the terminal device in FIG. 1 or a chip (system) in the terminal device. In this embodiment of this application, the chip system may include a chip, or may include a chip and another discrete device. For a specific function, refer to the descriptions in the foregoing method embodiments. For another example, the communication apparatus 800 may be the network device in FIG. 1 or a chip (system) in the network device. In this embodiment of this application, the chip system may include a chip, or may include a chip and another discrete device. For a specific function, refer to the descriptions in the foregoing method embodiments.

The communication apparatus 800 includes one or more processors 801, configured to implement or support the communication apparatus 800 in implementing functions of the terminal device or the network device in the method provided in embodiments of this application. For details, refer to detailed descriptions in the method examples. Details are not described herein again. The processor 801 may also be referred to as a processing unit or a processing module, and may implement a specific control function. The processor 801 may be a general-purpose processor, a dedicated processor, or the like. For example, the processor includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to control the communication apparatus 800 (for example, the network device or the terminal device), execute a software program, and/or process data. Different processors may be independent devices, or may be integrated into one or more processors, for example, integrated into one or more application-specific integrated circuits.

In a design, the processor 801 may include a program 803 (sometimes may also be referred to as code or instructions). The program 803 may be run on the processor 801, to cause the communication apparatus 800 to perform the method described in the following embodiments. In another possible design, the communication apparatus 800 includes a circuit (not shown in FIG. 8), and the circuit is configured to implement functions of the terminal device, the network device, or the like in the foregoing embodiments.

In a design, the communication apparatus 800 may include one or more memories 802 storing a program 804 (sometimes may also be referred to as code or instructions). The program 808 may be run on the processor 801, to cause the communication apparatus 800 to perform the method described in the foregoing method embodiments.

In a design, the processor 801 and/or the memory 802 may include an artificial intelligence (artificial intelligence, AI) module 807 and an AI module 808. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 801 and/or the memory 802 may further store data. The processor and the memory may be separately disposed, or may be integrated together.

In a possible design, the communication apparatus 800 may further include a transceiver 805 and/or an antenna 806. The processor 801 may sometimes also be referred to as a processing unit, and controls the communication apparatus 800. The transceiver 805 may sometimes also be referred to as a transceiver unit, a transceiver machine, a transceiver circuit, a transceiver, or the like, and is configured to implement a transceiver function of the communication apparatus 800 through the antenna 806.

In a possible design, the communication apparatus 800 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 800 may include more or fewer components, or some components may be integrated, or some components may be split. These components may be implemented by hardware, software, or a combination of software and hardware.

The communication apparatus in the foregoing embodiment may be the terminal device, may be a circuit, or may be the chip used in the terminal device, or another combined device, component, or the like having the terminal device. Alternatively, the communication apparatus in the foregoing embodiment may be the network device, may be a circuit, or may be the chip used in the network device, or another combined device, component, or the like having the network device. When the communication apparatus is the terminal device (or the network device), the transceiver module may be a transceiver, and may include an antenna, a radio frequency circuit, and the like, and the processing module may be a processor, for example, a CPU. When the communication apparatus is a chip system, the communication apparatus may be an FPGA, a dedicated ASIC, a system-on-a-chip (system-on-a-chip, SoC), a CPU, a network processor (network processor, NP), a DSP, a microcontroller unit (microcontroller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

An embodiment of this application further provides a communication system. Specifically, the communication system includes at least one terminal device and at least one network device. The terminal device is a terminal device configured to implement functions related to the communication method 400, and the network device is a network device configured to implement functions related to the communication method 400. For details, refer to related descriptions in the method embodiments. Details are not described herein again.

An embodiment of this application further provides a computer-readable storage medium, including instructions. When the instructions are run on a computer, the computer is caused to perform the method performed by the terminal device or the network device in the communication method 400.

An embodiment of this application further provides a computer program product, including computer program code. When the computer program code is executed, a computer is caused to perform the method performed by the terminal device or the network device in the communication method 400.

An embodiment of this application provides a chip system. The chip system includes a processor, may further include a memory, and is configured to implement functions of the terminal device or the network device in the communication method 400. The chip system may include a chip, or may include a chip and another discrete device.

To implement functions of the communication apparatuses in FIG. 7 and FIG. 8, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

It should be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or part of the steps of the methods described in embodiments of this application. The foregoing storage medium includes any medium that can store program code, such as a USB flash drive, a removable hard disk drive, a ROM, a RAM, a magnetic disk, or an optical disc.

It is clear that a person skilled in the art can make various modifications and variations to this application without departing from the scope of this application. This application is intended to cover these modifications and variations of this application provided that these modifications and variations fall within the scope of protection defined by the claims in this application and equivalent technologies thereof.

## Claims

1. A communication method, comprising:
receiving first information and second information, wherein the first information indicates a first sequence, the second information indicates positions of reference signal resources, and the reference signal resources are non-uniformly distributed in frequency domain; and
determining a second sequence based on the first sequence and the positions of the reference signal resources, wherein the second sequence corresponds to a reference signal.

2. The method according to claim 1, wherein that the second information indicates the positions of the reference signal resources comprises:
the second information indicates M indexes, wherein the M indexes are indexes of relative positions of the reference signal resources with respect to a reference resource, or the M indexes are indexes of absolute positions of the reference signal resources; and M is a positive integer.

3. The method according to claim 2, wherein the first sequence comprises N elements, and the second sequence comprises M elements in the N elements, wherein positions of the M elements in the N elements correspond to the M indexes, and N is a positive integer.

4. The method according to claim 2 or 3, wherein the first information comprises a first parameter and/or a first length, wherein the first parameter indicates all or part of coefficients of a polynomial corresponding to a phase of the first sequence, and the first length is a length of the first sequence.

5. The method according to any one of claims 2 to 4, wherein the second information comprises information about the M indexes.

6. The method according to claim 5, wherein the information about the M indexes comprises one or more of the following:
a second parameter, wherein the second parameter indicates all or part of coefficients of a polynomial corresponding to the M indexes;
a highest degree of a polynomial corresponding to the M indexes; or
the M indexes.

7. The method according to claim 6, wherein the second information further comprises:
a reference index, wherein the reference index is an index of an absolute position of the reference resource.

8. The method according to claim 7, wherein when the M indexes are the indexes of the relative positions of the reference signal resources with respect to the reference resource, and the reference index is less than or equal to an index of a starting absolute position of the reference signal resources, a sum of an i^{th} index in the M indexes and the reference index is an i^{th} absolute index, wherein the i^{th} absolute index is an i^{th} index in the indexes of the absolute positions of the reference signal resources, and i is an integer greater than or equal to 0.

9. The method according to claim 7, wherein when the M indexes are the indexes of the relative positions of the reference signal resources with respect to the reference resource, and the reference index is greater than or equal to an index of an ending absolute position of the reference signal resources, a difference between the reference index and an i^{th} index in the M indexes is an i^{th} absolute index, wherein the i^{th} absolute index is an i^{th} index in the indexes of the absolute positions of the reference signal resources, and i is an integer greater than or equal to 0.

10. The method according to any one of claims 2 to 9, wherein the method further comprises:
sending or receiving the reference signal based on the reference signal resources.

11. The method according to any one of claims 2 to 10, wherein
a k^{th} element in the second sequence is mapped to a reference signal resource corresponding to an r^{th} element in the M indexes, wherein k is equal to r, or a sum of k and r is equal to M-1 or M+1; and k is an integer greater than or equal to 0, and r is an integer greater than or equal to 0.

12. A communication method, comprising:
sending first information and second information, wherein the first information indicates a first sequence, the second information indicates positions of reference signal resources, the reference signal resources are non-uniformly distributed in frequency domain, the first sequence and the positions of the reference signal resources are for determining a second sequence, and the third sequence corresponds to a reference signal.

13. The method according to claim 12, wherein that the second information indicates the positions of the reference signal resources comprises:
the second information indicates M indexes, wherein the M indexes are indexes of relative positions of the reference signal resources with respect to a reference resource, or the M indexes are indexes of absolute positions of the reference signal resources; and M is a positive integer.

14. The method according to claim 13, wherein the first sequence comprises N elements, and the second sequence comprises M elements in the N elements, wherein positions of the M elements in the N elements correspond to the M indexes, and N is a positive integer.

15. The method according to claim 12 or 13, wherein the first information comprises a first parameter and/or a first length, wherein the first parameter indicates all or part of coefficients of a polynomial corresponding to a phase of the first sequence, and the first length is a length of the first sequence.

16. The method according to any one of claims 13 to 15, wherein the second information comprises information about the M indexes.

17. The method according to claim 16, wherein the information about the M indexes comprises one or more of the following:
a second parameter, wherein the second parameter indicates all or part of coefficients of a polynomial corresponding to the M indexes;
a highest degree of a polynomial corresponding to the M indexes; or
the M indexes.

18. The method according to claim 17, wherein the second information further comprises:
a reference index, wherein the reference index is an index of an absolute position of the reference resource.

19. The method according to claim 18, wherein when the M indexes are the indexes of the relative positions of the reference signal resources with respect to the reference resource, and the reference index is less than or equal to an index of a starting absolute position of the reference signal resources, a sum of an i^{th} index in the M indexes and the reference index is an i^{th} absolute index, wherein the i^{th} absolute index is an i^{th} index in the indexes of the absolute positions of the reference signal resources, and i is an integer greater than or equal to 0.

20. The method according to claim 18, wherein when the M indexes are the indexes of the relative positions of the reference signal resources with respect to the reference resource, and the reference index is greater than or equal to an index of an ending absolute position of the reference signal resources, a difference between the reference index and an i^{th} index in the M indexes is an i^{th} absolute index, wherein the i^{th} absolute index is an i^{th} index in the indexes of the absolute positions of the reference signal resources, and i is an integer greater than or equal to 0.

21. The method according to any one of claims 13 to 20, wherein the method further comprises:
sending or receiving the reference signal based on the reference signal resources.

22. The method according to any one of claims 13 to 21, wherein
a k^{th} element in the second sequence is mapped to a reference signal resource corresponding to an r^{th} element in the M indexes, wherein k is equal to r, or a sum of k and r is equal to M-1 or M+1; and k is an integer greater than or equal to 0, and r is an integer greater than or equal to 0.

23. A communication apparatus, comprising:
a transceiver module, configured to receive first information and second information, wherein the first information indicates a first sequence, the second information indicates positions of reference signal resources, and the reference signal resources are non-uniformly distributed in frequency domain; and
a processing module, configured to determine a second sequence based on the first sequence and the positions of the reference signal resources, wherein the second sequence corresponds to a reference signal.

24. The apparatus according to claim 23, wherein that the second information indicates the positions of the reference signal resources comprises:
the second information indicates M indexes, wherein the M indexes are indexes of relative positions of the reference signal resources with respect to a reference resource, or the M indexes are indexes of absolute positions of the reference signal resources; and M is a positive integer.

25. The apparatus according to claim 24, wherein the first sequence comprises N elements, and the second sequence comprises M elements in the N elements, wherein positions of the M elements in the N elements correspond to the M indexes, and N is a positive integer.

26. The apparatus according to claim 24 or 25, wherein the first information comprises a first parameter and/or a first length, wherein the first parameter indicates all or part of coefficients of a polynomial corresponding to a phase of the first sequence, and the first length is a length of the first sequence.

27. The apparatus according to any one of claims 24 to 26, wherein the second information comprises information about the M indexes.

28. The apparatus according to claim 27, wherein the information about the M indexes comprises one or more of the following:
a second parameter, wherein the second parameter indicates all or part of coefficients of a polynomial corresponding to the M indexes;
a highest degree of a polynomial corresponding to the M indexes; or
the M indexes.

29. The apparatus according to claim 28, wherein the second information further comprises:
a reference index, wherein the reference index is an index of an absolute position of the reference resource.

30. The apparatus according to claim 29, wherein when the M indexes are the indexes of the relative positions of the reference signal resources with respect to the reference resource, and the reference index is less than or equal to an index of a starting absolute position of the reference signal resources, a sum of an i^{th} index in the M indexes and the reference index is an i^{th} absolute index, wherein the i^{th} absolute index is an i^{th} index in the indexes of the absolute positions of the reference signal resources, and i is an integer greater than or equal to 0.

31. The apparatus according to claim 29, wherein when the M indexes are the indexes of the relative positions of the reference signal resources with respect to the reference resource, and the reference index is greater than or equal to an index of an ending absolute position of the reference signal resources, a difference between the reference index and an i^{th} index in the M indexes is an i^{th} absolute index, wherein the i^{th} absolute index is an i^{th} index in the indexes of the absolute positions of the reference signal resources, and i is an integer greater than or equal to 0.

32. The apparatus according to any one of claims 24 to 31, wherein the transceiver module is further configured to:
send or receive the reference signal based on the reference signal resources.

33. The apparatus according to any one of claims 24 to 32, wherein
a k^{th} element in the second sequence is mapped to a reference signal resource corresponding to an r^{th} element in the M indexes, wherein k is equal to r, or a sum of k and r is equal to M-1 or M+1; and k is an integer greater than or equal to 0, and r is an integer greater than or equal to 0.

34. A communication apparatus, comprising:
a processing module, configured to determine first information and second information, wherein the first information indicates a first sequence, the second information indicates positions of reference signal resources, the reference signal resources are non-uniformly distributed in frequency domain, the first sequence and the positions of the reference signal resources are for determining a second sequence, and the third sequence corresponds to a reference signal; and
a transceiver module, configured to send the first information and the second information.

35. The apparatus according to claim 34, wherein that the second information indicates the positions of the reference signal resources comprises:
the second information indicates M indexes, wherein the M indexes are indexes of relative positions of the reference signal resources with respect to a reference resource, or the M indexes are indexes of absolute positions of the reference signal resources; and M is a positive integer.

36. The apparatus according to claim 35, wherein the first sequence comprises N elements, and the second sequence comprises M elements in the N elements, wherein positions of the M elements in the N elements correspond to the M indexes, and N is a positive integer.

37. The apparatus according to claim 34 or 35, wherein the first information comprises a first parameter and/or a first length, wherein the first parameter indicates all or part of coefficients of a polynomial corresponding to a phase of the first sequence, and the first length is a length of the first sequence.

38. The apparatus according to any one of claims 35 to 37, wherein the second information comprises information about the M indexes.

39. The apparatus according to claim 38, wherein the information about the M indexes comprises one or more of the following:
a second parameter, wherein the second parameter indicates all or part of coefficients of a polynomial corresponding to the M indexes;
a highest degree of a polynomial corresponding to the M indexes; or
the M indexes.

40. The apparatus according to claim 39, wherein the second information further comprises:
a reference index, wherein the reference index is an index of an absolute position of the reference resource.

41. The apparatus according to claim 40, wherein when the M indexes are the indexes of the relative positions of the reference signal resources with respect to the reference resource, and the reference index is less than or equal to an index of a starting absolute position of the reference signal resources, a sum of an i^{th} index in the M indexes and the reference index is an i^{th} absolute index, wherein the i^{th} absolute index is an i^{th} index in the indexes of the absolute positions of the reference signal resources, and i is an integer greater than or equal to 0.

42. The apparatus according to claim 40, wherein when the M indexes are the indexes of the relative positions of the reference signal resources with respect to the reference resource, and the reference index is greater than or equal to an index of an ending absolute position of the reference signal resources, a difference between the reference index and an i^{th} index in the M indexes is an i^{th} absolute index, wherein the i^{th} absolute index is an i^{th} index in the indexes of the absolute positions of the reference signal resources, and i is an integer greater than or equal to 0.

43. The apparatus according to any one of claims 35 to 42, wherein the transceiver module is further configured to:
send or receive the reference signal based on the reference signal resources.

44. The apparatus according to any one of claims 35 to 43, wherein
a k^{th} element in the second sequence is mapped to a reference signal resource corresponding to an r^{th} element in the M indexes, wherein k is equal to r, or a sum of k and r is equal to M-1 or M+1; and k is an integer greater than or equal to 0, and r is an integer greater than or equal to 0.

45. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 11, or to cause the communication apparatus to perform the method according to any one of claims 12 to 22.

46. A computer-readable storage medium, wherein the computer-readable storage medium is configured to store a computer program, and when the computer program is run on a computer, the computer is caused to perform the method according to any one of claims 1 to 11, or the computer is caused to perform the method according to any one of claims 12 to 22.

47. A computer program product, wherein the computer program product comprises a computer program, and when the computer program is run on a computer, the computer is caused to perform the method according to any one of claims 1 to 11, or the computer is caused to perform the method according to any one of claims 12 to 22.

48. A chip system, wherein the chip system comprises:
a processor and an interface, wherein the processor is configured to invoke instructions from the interface and run the instructions, and when the processor executes the instructions, the method according to any one of claims 1 to 11 is implemented, or the method according to any one of claims 12 to 22 is implemented.
